# EUROPEAN PATENT SPECIFICATION

(11) **EP 4 213 514 B1**
(45) Date of publication and mention of the grant of the patent: **03.09.2025**
(21) Application number: 20955838.6
(22) Date of filing: 30.09.2020
(51) Int. Cl.: H04B 7/155, H04W 76/11, H04W 76/12, H04W 8/26, H04W 84/04, H04W 88/08

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(43) Date of publication of application: 19.07.2023
(73) Proprietor: Huawei Technologies Co., Ltd., Shenzhen, Guangdong 518129 (CN)
(72) Inventor: LUO, Haiyan, Shenzhen, Guangdong 518129 (CN); ZHU, Yuanping, Shenzhen, Guangdong 518129 (CN)
(74) Representative: Maiwald GmbH
(86) International application number: PCT/CN2020/119751
(87) International publication number: WO 2022/067818

(56) References cited:
- EP-A1- 3 780 877
- EP-A1- 3 790 336
- EP-A1- 3 926 912
- EP-A1- 4 027 673
- CN-A- 110 351 700
- CN-A- 110 351 700
- CN-A- 110 418 427
- CN-A- 110 475 351
- CN-A- 110 475 351
- CN-A- 111 586 709
- CN-A- 111 586 709
- CN-A- 111 727 634
- HUAWEI: "Support for IAB", 3GPP TSG RAN WG3 MEETING #105BIS R3-194967, 18 October 2019 (2019-10-18), XP051792017
- QUALCOMM INCORPORATED ET AL.: "Handling of OAM traffic for IAB-node", 3GPP TSG-SA WG2 MEETING #135 S2-1909809, 18 October 2019 (2019-10-18), XP051795895

## Description

### TECHNICAL FIELD

Embodiments of this application relate to the field of communication technologies, and in particular, to a data transmission method and apparatus.

### BACKGROUND

In an integrated access and backhaul (integrated access and backhaul, IAB) network, an IAB node provides a wireless access service for a terminal device (user equipment, UE), and an IAB donor is connected to a core network element serving the UE, and provides a wireless backhaul function for the IAB node.

CN110351700A describes a relay forwarding method of a self-access backhaul link and a node. It is described that the method comprises the following steps: a first IAB node receives a data packet; and the first IAB node sends the data packet to an IAB host, and the IAB host distribution unit DU obtains first information after receiving the data packet sent by the IAB node, and sends the data packet to the IAB host centralized unit CU according to the first information. It is described that, relay forwarding can be carried out in the IAB architecture, so that the data of the UE can be sent and received correctly.

Currently, service data of the UE needs to be transmitted to the IAB node, the IAB donor, and then a core network, and is processed by the core network element. Therefore, a delay is long, and requirements of some low-delay services cannot be met.

### SUMMARY

This application provides a data transmission method and apparatus, to process a service through a locally deployed data network, thereby reducing a service delay and meet a requirement of a low-delay service.

Appended claim 1 defines a data transmission method. Appended claim 7 defines a data transmission method. Appended claim 10 defines a data transmission method. Appended claim 11 defines a communication apparatus. The invention and its scope of protection is defined by these independent claims. The following aspects and implementations of the disclosure provide examples of combinations of technical subject matters.

According to a first aspect, embodiments of this application provide a data transmission method, applied to a first integrated access and backhaul IAB donor, and including: receiving a first message from a core network element, where the first message carries an identifier of a first protocol data unit PDU session and a first data network name DNN associated with the identifier of the first PDU session, and the first DNN indicates a local data network corresponding to a first IAB node, where the first IAB node includes a first IAB central unit-user plane CU-UP, a first IAB-distributed unit DU, and a first IAB-mobile terminal MT; and the first IAB CU-UP is connected to the local data network; and notifying the first IAB CU-UP to establish the first PDU session.

In embodiments of this application, the IAB node includes a CU-UP, and the local data network connected to an IAB CU-UP is set. The IAB donor interacts with a core network, and offloads service data of a terminal device to the local data network connected to the IAB CU-UP for processing, so that a processing delay of a UE service may be reduced.

In an optional implementation, there is a mapping relationship between the first DNN and the first IAB-MT.

In an optional implementation, the method further includes: receiving a second message from the core network element, where the second message indicates a mapping relationship between an identifier of the first IAB-MT and the first DNN.

In an optional implementation, the notifying the first IAB CU-UP to establish the first PDU session includes: sending, to the first IAB CU-UP, a first indication message indicating to establish the first PDU session, where the first indication message carries a backhaul adaptation protocol BAP address of the first IAB-MT and an IP address of the first IAB CU-UP.

In an optional implementation, the method further includes: receiving a first request message from the first IAB CU-UP, where the first request message is used to request to establish an interface between the first IAB CU-UP and a central unit-control plane CU-CP of the first IAB donor, and the first request message carries the BAP address of the first IAB-MT and the IP address of the first IAB CU-UP; and determining a mapping relationship between the BAP address of the first IAB-MT and the IP address of the first IAB CU-UP based on the first request message.

In an optional implementation, the method further includes: receiving the IP address of the first IAB CU-UP from the first IAB-MT; or receiving a second request message from the first IAB-MT, where the second request message is used to request the IP address of the first IAB CU-UP, and sending a second indication message to the first IAB CU-UP, where the second indication message carries the IP address of the first IAB CU-UP.

In an optional implementation, the method further includes: determining to hand over a terminal device to a second IAB donor; and sending a handover request message to the second IAB donor, where the handover request message carries the identifier of the first PDU session and the first DNN.

According to a second aspect, embodiments of this application provide a data transmission method, applied to a first integrated access and backhaul IAB node, where the first IAB node includes a first IAB central unit-user plane CU-UP, a first IAB-distributed unit DU, and a first IAB-mobile terminal MT; the first IAB CU-UP is connected to a local data network corresponding to the first IAB node; and the method includes: a first IAB-MT of the first IAB node receives a first indication message from a first IAB donor, where the first indication message indicates the first IAB CU-UP to establish a first protocol data unit PDU session; the first indication message carries a backhaul adaptation protocol BAP address of the first IAB-MT and an IP address of the first IAB CU-UP of the first IAB node; the first IAB-MT of the first IAB node forwards the first indication message to the first IAB CU-UP based on the IP address of the first IAB CU-UP carried in the first indication message; and the first IAB CU-UP of the first IAB node establishes the first PDU session.

In embodiments of this application, the IAB node includes a CU-UP, and the local data network connected to the IAB CU-UP is set. The IAB CU-UP processes, based on an indication of the IAB donor, a UE service offloaded by the IAB donor through the local data network, so that a processing delay of the UE service may be reduced.

In an optional implementation, the first indication message carries an identifier of the first PDU session, the identifier of the first PDU session has an association relationship with a first data network name DNN, and the first DNN indicates the local data network corresponding to the first IAB node.

In an optional implementation, there is a mapping relationship between the first DNN and the first IAB-MT.

In an optional implementation, before receiving first indication information, the method further includes: the first IAB CU-UP of the first IAB node sends a first request message to the first IAB donor, where the first request message is used to request to establish an interface between the first IAB CU-UP and a central unit-control plane CU-CP of the first IAB donor; and the first request message carries the BAP address of the first IAB-MT and the IP address of the first IAB CU-UP.

In an optional implementation, the method further includes: the first IAB CU-UP of the first IAB node obtains the IP address of the first IAB CU-UP allocated by operation, administration, and maintenance OAM corresponding to the first IAB CU-UP; or the first IAB-MT of the first IAB node sends a second request message to the first IAB donor, where the second request message is used to request the IP address of the first IAB CU-UP, and sends a second indication message from the first IAB donor to the first IAB CU-UP, where the second indication message carries the IP address of the first IAB CU-UP.

According to a third aspect, embodiments of this application provide a data transmission method, applied to a core network element, and including: receiving a protocol data unit PDU session setup request message from a terminal device, where the PDU session setup request message is used to request to establish a first PDU session, and the PDU session setup request message carries an identifier of the first PDU session and a first data network name DNN associated with the identifier of the first PDU session; determining that the first DNN indicates a local data network corresponding to a first integrated access and backhaul IAB node, where the first IAB node includes a first IAB central unit-user plane CU-UP, a first IAB-distributed unit DU, and a first IAB-mobile terminal MT; and the first IAB CU-UP is connected to the local data network; and sending a first message to a first IAB donor connected to the first IAB node, where the first message carries the identifier of the first PDU session and the first DNN.

In embodiments of this application, the IAB node includes a CU-UP, and the local data network connected to the IAB CU-UP is set. The core network element may indicate the IAB donor to offload service data from a terminal device to the local data network connected to the IAB CU-UP for processing, so that a processing delay of a UE service may be reduced.

In an optional implementation, the method further includes: sending a second message to the first IAB donor, where the second message indicates a mapping relationship between an identifier of the first IAB-MT and the first DNN.

According to a fourth aspect, embodiments of this application provide a data transmission apparatus, applied to a first integrated access and backhaul IAB donor, and including: a communication module, configured to receive a first message from a core network element, where the first message carries an identifier of a first protocol data unit PDU session and a first data network name DNN associated with the identifier of the first PDU session, and the first DNN indicates a local data network corresponding to a first IAB node; the first IAB node includes a first IAB central unit-user plane CU-UP, a first IAB-distributed unit DU, and a first IAB-mobile terminal MT; and the first IAB CU-UP is connected to the local data network. The communication module is further configured to notify the first IAB CU-UP to establish the first PDU session.

In embodiments of this application, the IAB node includes a CU-UP, and the local data network connected to an IAB CU-UP is set. The IAB donor interacts with a core network, and offloads service data of a terminal device to the local data network connected to the IAB CU-UP for processing, so that a processing delay of a UE service may be reduced.

In an optional implementation, there is a mapping relationship between the first DNN and the first IAB-MT.

In an optional implementation, the communication module is further configured to: receive a second message from the core network element, where the second message indicates a mapping relationship between an identifier of the first IAB-MT and the first DNN.

In an optional implementation, the communication module is further configured to: send, to the first IAB CU-UP, a first indication message indicating to establish the first PDU session, where the first indication message carries a backhaul adaptation protocol BAP address of the first IAB-MT and an IP address of the first IAB CU-UP.

In an optional implementation, the apparatus further includes a processing module, where the communication module is further configured to receive a first request message from the first IAB CU-UP, where the first request message is used to request to establish an interface between the first IAB CU-UP and a central unit-control plane CU-CP of the first IAB donor, and the first request message carries the BAP address of the first IAB-MT and the IP address of the first IAB CU-UP; and the processing module is further configured to determine a mapping relationship between the BAP address of the first IAB-MT and the IP address of the first IAB CU-UP based on the first request message.

In an optional implementation, the communication module is further configured to: receive the IP address of the first IAB CU-UP from the first IAB-MT; or receive a second request message from the first IAB-MT, where the second request message is used to request the IP address of the first IAB CU-UP, and send a second indication message to the first IAB CU-UP, where the second indication message carries the IP address of the first IAB CU-UP.

In an optional implementation, the processing module is further configured to determine to hand over a terminal device to a second IAB donor; and the communication module is further configured to send a handover request message to the second IAB donor, where the handover request message carries the identifier of the first PDU session and the first DNN.

According to a fifth aspect, embodiments of this application provide a data transmission apparatus, applied to a first integrated access and backhaul IAB node, where the apparatus includes a first IAB central unit-user plane CU-UP, a first IAB-distributed unit DU, and a first IAB-mobile terminal MT; and the first IAB CU-UP is connected to a local data network corresponding to the first IAB node; and
the first IAB-MT is configured to receive a first indication message from a first IAB donor, where the first indication message indicates the first IAB CU-UP to establish a first protocol data unit PDU session; the first indication message carries a backhaul adaptation protocol BAP address of the first IAB-MT and an IP address of the first IAB CU-UP of the first IAB node; the first IAB-MT is further configured to forward the first indication message to the first IAB CU-UP based on the IP address of the first IAB CU-UP carried in the first indication message; and the first IAB CU-UP is used to establish the first PDU session.

In embodiments of this application, the IAB node includes a CU-UP, and the local data network connected to the IAB CU-UP is set. The IAB CU-UP processes, based on an indication of the IAB donor, a UE service offloaded by the IAB donor through the local data network, so that a processing delay of the UE service may be reduced.

In an optional implementation, the first indication message carries an identifier of the first PDU session, the identifier of the first PDU session has an association relationship with a first data network name DNN, and the first DNN indicates the local data network corresponding to the first IAB node.

In an optional implementation, there is a mapping relationship between the first DNN and the first IAB-MT.

In an optional implementation, the first IAB CU-UP is further configured to: before receiving first indication information, send a first request message to the first IAB donor, where the first request message is used to request to establish an interface between the first IAB CU-UP and a central unit-control plane CU-CP in the first IAB donor, and the first request message carries a BAP address of the first IAB-MT and an IP address of the first IAB CU-UP.

In an optional implementation, the first IAB CU-UP is further configured to: obtain the IP address of the first IAB CU-UP allocated by operation, administration, and maintenance OAM corresponding to the first IAB CU-UP; or send a second request message to the first IAB donor, where the second request message is used to request the IP address of the first IAB CU-UP, and send a second indication message from the first IAB donor to the first IAB CU-UP, where the second indication message carries the IP address of the first IAB CU-UP.

According to a sixth aspect, embodiments of this application provide a data transmission apparatus, applied to a core network element, and including: a communication module, configured to receive a protocol data unit PDU session setup request message from a terminal device, where the PDU session setup request message is used to request to establish a first PDU session, and the PDU session setup request message carries an identifier of the first PDU session and a first data network name DNN associated with the identifier of the first PDU session; and a processing module, configured to determine that the first DNN indicates a local data network corresponding to a first integrated access and backhaul IAB node; the first IAB node includes a first IAB central unit-user plane CU-UP, a first IAB-distributed unit DU, and a first IAB-mobile terminal MT; and the first IAB CU-UP is connected to the local data network. The communication module is further configured to send a first message to a first IAB donor connected to the first IAB node, where the first message carries the identifier of the first PDU session and the first DNN.

In embodiments of this application, the IAB node includes a CU-UP, and the local data network connected to the IAB CU-UP is set. The core network element may indicate the IAB donor to offload service data from a terminal device to the local data network connected to the IAB CU-UP for processing, so that a processing delay of a UE service may be reduced.

In an optional implementation, the communication module is further configured to send a second message to the first IAB donor, where the second message indicates a mapping relationship between an identifier of the first IAB-MT and the first DNN.

According to a seventh aspect, embodiments of this application provide a communication apparatus, including a processor and a memory, where
the memory is configured to store a computer program; and
the processor is configured to execute the computer program stored in the memory, to enable the method in any optional implementation of the first aspect to the third aspect to be performed.

According to an eighth aspect, a communication apparatus is provided, including a processor and an interface circuit, where
the interface circuit is configured to receive code instructions and transmit the code instructions to the processor; and
the processor is configured to run the code instructions, to enable the method in any optional implementation of the first aspect to the third aspect to be performed.

According to a ninth aspect, a computer-readable storage medium is provided. The computer-readable storage medium stores instructions, where when the instructions are executed, the method in any optional implementation of the first aspect to the third aspect is performed.

According to a tenth aspect, embodiments of this application provide a computer program product. The computer program product includes computer program code, and when the computer program code is run, the method in any optional implementation of the first aspect to the third aspect is performed.

For technical effects that may be achieved in the seventh aspect to the tenth aspect, refer to descriptions of technical effects that may be brought by the corresponding technical solutions in the first aspect to the third aspect. Details are not repeated.

### BRIEF DESCRIPTION OF DRAWINGS

FIG. 1 is a schematic diagram of a RAN architecture according to an embodiment of this application;
FIG. 2 is a schematic diagram of an architecture of a network device according to an embodiment of this application;
FIG. 3 is a schematic diagram 1 of an IAB network architecture according to an embodiment of this application;
FIG. 4a is a schematic diagram 2 of an IAB network architecture according to an embodiment of this application;
FIG. 4b is a schematic diagram 3 of an IAB network architecture according to an embodiment of this application;
FIG. 5a is a schematic diagram of an IAB control plane F1 interface protocol stack according to an embodiment of this application;
FIG. 5b is a schematic diagram of an IAB control plane E1 interface protocol stack according to an embodiment of this application;
FIG. 6 is a schematic flowchart of a data transmission method according to an embodiment of this application;
FIG. 7 is a schematic diagram of a handover process according to an embodiment of this application;
FIG. 8 is a block diagram of a structure of a data transmission apparatus according to an embodiment of this application;
FIG. 9 is a block diagram of a structure of another data transmission apparatus according to an embodiment of this application;
FIG. 10 is a schematic diagram 1 of a structure of a communication apparatus according to an embodiment of this application;
FIG. 11 is a schematic diagram of a structure of an access network device according to an embodiment of this application;
FIG. 12 is a schematic diagram 2 of a structure of a communication apparatus according to an embodiment of this application; and
FIG. 13 is a schematic diagram 3 of a structure of a communication apparatus according to an embodiment of this application.

### DESCRIPTION OF EMBODIMENTS

The following further describes in detail this application with reference to accompanying drawings.

In the following, some terms in this application are described, to help a person skilled in the art have a better understanding.

### (1) Network device

A network device is a device in a wireless network, such as a radio access network (radio access network, RAN) node through which a terminal device accesses the wireless network. Currently, some examples of the RAN node are: a generation NodeB (generation NodeB, gNB) in a 5th generation mobile communication technology (the 5th Generation mobile communication technology, 5G) network, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP), an integrated access and backhaul (integrated access and backhaul, IAB) node, and an IAB donor.

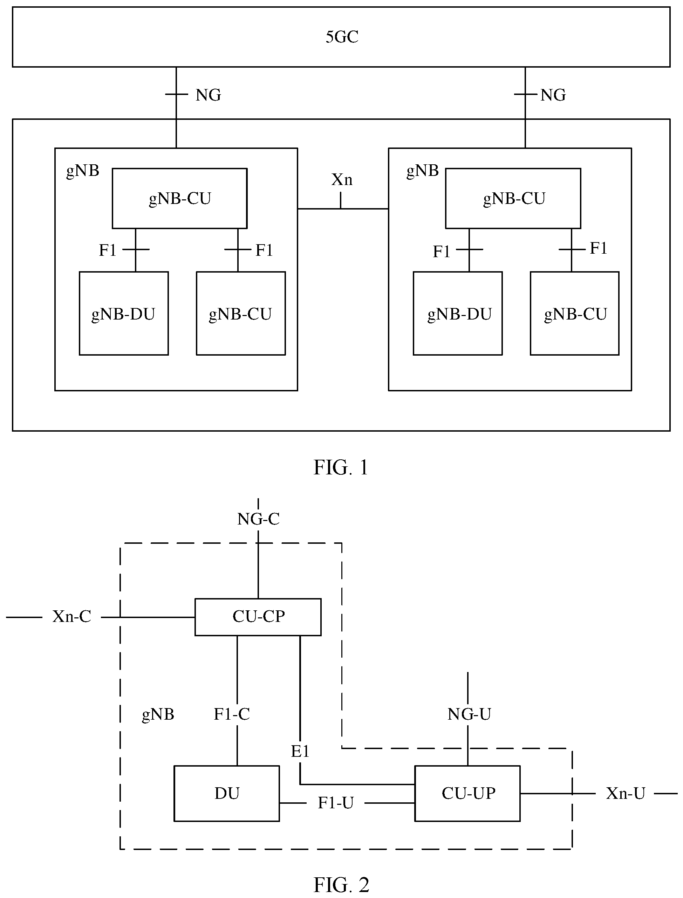

In an optional implementation, the network device may include a central unit (central unit, CU) node and/or a distributed unit (distributed unit, DU) node, and may also be respectively referred to as a gNB-CU and a gNB-DU in an NR system. A plurality of DUs may share one CU, to reduce costs and expand a network. A gNB in a 5G network is used as an example. In a RAN architecture shown in FIG. 1, the gNBs are connected through an Xn interface, and the gNB is connected to a core network 5GC through an NG interface. As shown in FIG. 1, each gNB includes one gNB-CU and two gNB-DUs. The gNB-CU is connected to the gNB-DU through an F1 interface. The gNB-CU represents that the gNB is connected to a core network through an NG interface. The gNB-CU represents that the gNB is connected to another gNB-CU or gNB through an Xn interface. In addition, the gNB-CU represents that the gNB performs a dual connectivity operation by connecting an X2 interface to another eNB.

In an optional implementation, some functions of the network device are deployed in the CU, and remaining functions are deployed in the DU. Functions of the CU and the DU may be split based on a protocol. For example, a radio resource control (radio resource control, RRC) layer, a service data adaptation protocol (service data adaptation protocol, SDAP) layer, and a packet data convergence protocol (packet data convergence protocol, PDCP) layer may be deployed on the CU; and a radio link control (radio link control, RLC) layer, a medium access control (media access control, MAC) layer, and a physical layer (physical, PHY) may be deployed on the DU.

Optionally, the CU of the network device may be further divided into a control plane (control plane, CP) network element and a user plane (user plane, UP) network element. The CU-CP is responsible for a control plane function, and a protocol stack of the CU-UP may include RRC and a PDCP corresponding to a control plane, that is, PDCP-C. The PDCP-C is mainly responsible for data encryption and decryption on the control plane, integrity protection, message transmission on the control plane, or the like. The CU-UP is responsible for a user plane function, and a protocol stack of the CU-UP may include an SDAP and a PDCP corresponding to a user plane, that is, PDCP-U. The SDAP is mainly responsible for processing data of the core network and mapping a flow to a bearer. The PDCP-U is mainly responsible for encryption and decryption, integrity protection, header compression, serial number maintenance, data transmission, and the like on a data plane. The gNB is used as an example. In an architecture of a network device shown in FIG. 2, the CU-CP in the gNB represents that the gNB is connected to the core network through a control plane corresponding to an NG interface, that is, NG-C; and the CU-CP in the gNB is connected to a gNB DU through a control plane corresponding to an F1 interface, that is, F1-C. The gNB CU-UP is connected to the gNB DU through a user plane corresponding to an F1 interface, that is, F1-U, and the gNB CU-UP represents that the gNB is connected to the core network through a control plane corresponding to an NG interface, that is, NG-U. The gNB CU-CP is connected to the gNB CU-UP through an E1 interface. In actual deployment, the CU-CP may be deployed together with the DU, or the CU-UP may be deployed together with the DU, or the CU-UP may be deployed together with the CU-CP, or the CU-CP and the DU are deployed together, and the CU-UP is deployed at a remote end.

### (2) Integrated access and backhaul (integrated access and backhaul, IAB)

In an IAB network, a relay node (relay node, RN) or an IAB node (IAB node) may provide a wireless access service for a terminal device (user equipment, UE), and an uplink data packet of the UE may be transmitted to an IAB donor (IAB donor) through one or more IAB nodes. The IAB donor may also be referred to as a donor node (donor node) or a donor gNodeB (donor gNodeB, DgNB). The IAB donor is connected to a core network element (for example, connected to a 5G core network or a 5GC) that serves the UE, and provides a wireless backhaul function for the IAB node.

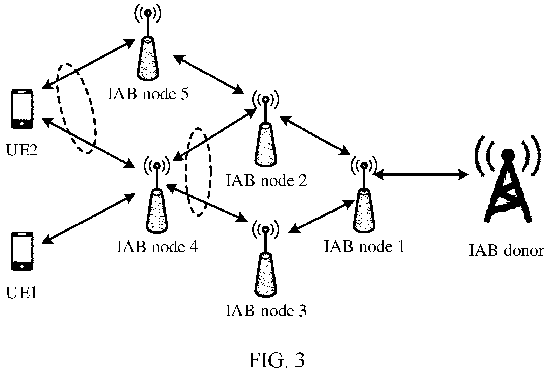

It may be understood that in the IAB network, one transmission path between the UE and the IAB donor may include one or more IAB nodes. If one IAB node is a node accessed by the UE, a link between the IAB node and a child node (that is, the UE) may be referred to as an access link (access link, AL). If one IAB node is a node that provides a backhaul service for the UE under another IAB node, a link between the IAB node and the child node (that is, another IAB node) may be referred to as a backhaul link (backhaul link, BL). FIG. 3 shows an IAB network architecture. UE1 performs wireless transmission with an IAB node 4 through an access link, and UE2 performs wireless transmission with the IAB node 4 or an IAB node 5 through the access link. The IAB node 4 performs wireless transmission with an IAB node 3 or an IAB node 2 through the backhaul link. An IAB node 1 performs wireless transmission with the IAB donor through the backhaul link.

Optionally, the IAB network supports networking of a multi-hop IAB node and a multi-connectivity IAB node. There may be a plurality of transmission paths between the UE and the IAB donor. On a path, there is a determined hierarchical relationship between IAB nodes, and between the IAB node and the IAB donor serving the IAB node. Each IAB node or UE considers a node that provides an access service for the IAB node or the UE as a parent node. Accordingly, each IAB node or terminal may be considered as a child node of a parent node of the child node. It may be understood that the parent node and the child node are relative concepts. A node may be a child node relative to one node, and may be a parent node relative to another node. For example, in FIG. 3, the IAB node 4 is a parent node of the UE1, and the UE1 is a child node of the IAB node 4; the IAB node 2 is a parent node of the IAB node 4, and the IAB node 4 is a child node of the IAB node 2; and the IAB donor is a parent node of the IAB node 1, and the IAB node 1 is a child node of the IAB donor.

The IAB introduces a new protocol layer, that is, a backhaul adaptation protocol (backhaul adaptation protocol, BAP) layer, to the wireless backhaul link. The BAP layer is located above an RLC layer, and may be used to implement functions such as routing of a data packet on the wireless backhaul link and bearer mapping.

That the IAB donor may be an access network element having a complete base station function, or the IAB donor is an access network element in a form of separation of a central unit (central unit, CU) and a distributed unit (distributed unit, DU) is currently defined. A central unit of the IAB donor, that is, an IAB donor CU, may be referred to as a donor CU or CU for short; and a distributed unit of the IAB donor, that is, an IAB donor DU, may be referred to as a donor DU for short. Further, the donor CU may be in a form of separation of the control plane (control plane, CP) and the user plane (user plane, UP). For example, the donor CU may include one CU-CP and one or more CU-UPs. The IAB node may include a mobile terminal (mobile terminal, MT) part and a DU part. When facing a parent node of the IAB node (another IAB node or the IAB donor), the IAB node may serve as a terminal device, that is, a role of the MT. When facing a child node of the IAB node (another IAB node or the UE), the IAB node may serve as a network device, that is, a role of the DU.

Based on the currently defined IAB donor and IAB node, service data of the UE needs to be transmitted to the IAB node, the IAB donor, and then the core network, and is processed by a user plane function (user plan function, UPF) network element and a data network (data network, DN) in the core network. Therefore, a delay is long, and requirements of some low-delay services cannot be met. In this case, embodiments of this application provide a new IAB node. To distinguish from an original IAB node including an MT part and a DU part, the new IAB node may be referred to as an IAB node*, and the IAB node* includes the MT part, the DU part, and a CU-UP part. In addition, a local UPF and a local DN corresponding to the IAB node* are deployed nearby for the IAB node*, for example, in a co-deployment scenario. In this way, it is expected that service data of the UE is transmitted to the local UPF and the local DN for processing through the IAB node*, to shorten a transmission delay and meet a requirement of a low delay of a service.

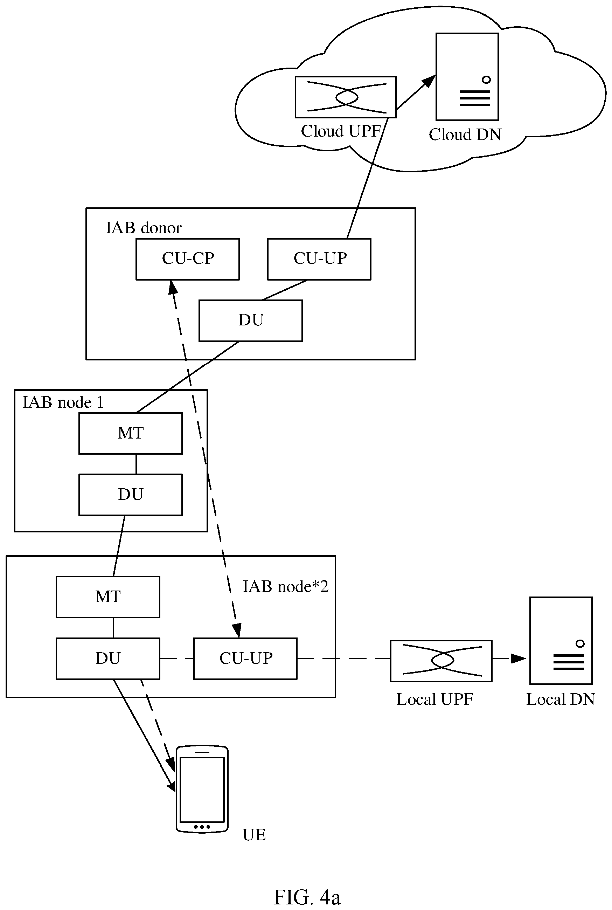

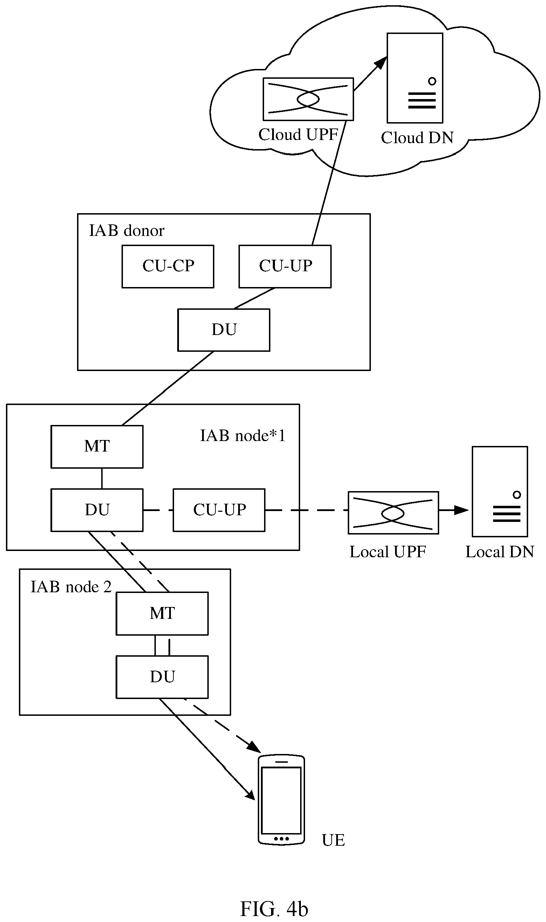

Optionally, an IAB network architecture may include an IAB node including an MT part and a DU part, or may include the foregoing IAB node*. For example, in the IAB network architecture shown in FIG. 4a, in the IAB network, a terminal device UE accesses an IAB node*2 (IAB node*2), the IAB node*2 includes an MT, a DU, and a CU-UP, and the IAB node*2 is associated with the local UPF and the local DN; the IAB node*2 performs wireless transmission with the IAB node 1 (IAB node 1) through the backhaul link, the IAB node*2 may be considered as the child node of the IAB node 1, and the IAB node 1 includes the MT part and the DU part; and the IAB node 1 performs wireless transmission with the IAB donor (IAB donor) through the backhaul link, the IAB donor (IAB donor) may be considered as the parent node of the IAB node 1, the IAB donor includes a CU-CP, a CU-UP, and a DU, the IAB donor is connected to the core network, and a remote UPF (or referred to as a cloud UPF) and a remote DN (or referred to as a cloud DN) are deployed in the core network. For another example, in the IAB network architecture shown in FIG. 4b, in the IAB network, a terminal device UE accesses the IAB node 2 (IAB node 2), and the IAB node 2 includes an MT part and a DU part; the IAB node 2 performs wireless transmission with the IAB node* 1 (IAB node*1) through the backhaul link, the IAB node 2 may be considered as the child node of the IAB node*1, and the IAB node*1 includes an MT, a DU, and a CU-UP, and the IAB node*2 is associated with a local UPF and a local DN; and the IAB node*2 performs wireless transmission with the IAB donor through the backhaul link, the IAB donor may be considered as the parent node of the IAB node*2, the IAB donor includes a CU-CP, a CU-UP, and a DU, the IAB donor is connected to the core network, and a remote UPF (or referred to as a cloud UPF) and a remote DN (or referred to as a cloud DN) are deployed in the core network. In the IAB network architecture shown in FIG. 4a or FIG. 4b, the service data of the UE may be transmitted to the core network for processing through a solid line path, or may be locally processed by a local DN associated with the IAB node* 1/IAB node*2 based on the dashed line path on a basis that the IAB donor may establish device to device communication with a CU-UP of the IAB node*1/IAB node*2.

In addition, it should be noted that the IAB node*, the IAB node*2, or the IAB node*1 is only a name for distinguishing from an original IAB node, is used to represent an IAB node including a CU-UP part, and may be represented by using another name. This is not limited in embodiments of this application.

Optionally, an IAB network architecture that includes both the IAB node and the IAB node* and that is provided in embodiments of this application may be applied to an industrial communication infrastructure, for example, an industrial internet of things (industry internet of things, IIoT). The IAB architecture provides a public control plane. Some IAB nodes support a public network, and some IAB nodes support a private network. Based on a service provided by a data network on a core network side, a related local data network deployed on an IAB node* is introduced to provide a service, so that a requirement of a low delay of an edge computing service that has a long transmission path to the core network may be met, to cause deployment of a controller and a device in industrial communication to be more flexible, and ensure that in an industrial communication mode, for example, controller to controller (controller to controller, C2C) communication, controller to device (controller to device, C2D) communication, and device to device (device to device, D2D) communication are normal. In a specific application, for example, the IIoT is divided into a public network domain, an IT enterprise domain, and an OT industry domain. An IAB node* may be deployed in the OT industry domain, and a local data network associated with the IAB node* provides a service for a service in the OT industry domain. The service does not need to be transmitted to the public network domain for processing, so that data security may be improved while the requirement of the low delay is ensured.

The following first describes in detail a procedure of constructing communication between the IAB node* and the IAB donor according to an embodiment of this application.

S1. Establish an operation, administration, and maintenance (operation, administration, and maintenance, OAM) connection of a DU of the IAB node* and establish an OAM connection of the IAB node*.

In an optional implementation, a data network name (data network name, DNN) of a data network in which OAM corresponding to the DU of the IAB node* is located is different from the DNN of the data network in which OAM corresponding to the CU-UP of the IAB node* is located. The MT of the IAB node* may send, to the core network element through the IAB network, a message carrying a DNN related to the OAM corresponding to the DU of the IAB node* or a message carrying a DNN related to the OAM corresponding to the CU-UP of the IAB node*. For example, a message sent by the MT of the IAB node* to the core network element may be a non-access stratum (non-access stratum, NAS) layer PDU session setup request message. The core network element determines, based on the DNN carried in the message, whether the MT of the IAB node* requests an OAM connection for the DU of the IAB node* or requests an OAM connection for the CU-UP of the IAB node*.

In another optional implementation, the MT of the IAB node* may send, to the core network element through the IAB network, a message carrying indication information used to indicate the DU of the IAB node* or the CU-UP of the IAB node*. The core network element determines, based on the indication information carried in the message, whether the MT of the IAB node* requests an OAM connection for the DU of the IAB node* or requests an OAM connection for the CU-UP of the IAB node*. For example, the MT of the IAB node* includes a first indication in a PDU session setup request message at the NAS layer. The first indication indicates whether the IAB node*MT applies for establishing the OAM connection for the DU of the IAB node* (IAB-DU for short) or the CU-UP of the IAB node* (IAB CU-UP for short). A value of the first indication may be represented by using text information. For example, "IAB DU" indicates that the IAB node*MT applies for establishing the OAM connection for the DU of the IAB node*, and the "IAB CU-UP" indicates that the IAB node*MT applies for establishing the OAM connection for the CU-UP of the IAB node*. Alternatively, the value of the first indication may be represented by using a bit. For example, if the value of the first indication is a bit "0", it indicates that the IAB node*MT applies for establishing the OAM connection for the DU of the IAB node*. If the value of the first indication is a bit "1", it indicates that the IAB node*MT applies for establishing the OAM connection for the CU-UP of the IAB node*. In addition, optionally, the MT of the IAB node* may also include a second indication or a third indication in the PDU session setup request message at the NAS layer. The second indication indicates to apply for establishing the OAM connection for the DU of the IAB node*, and the third indication indicates to apply for establishing the OAM connection for the CU-UP of the IAB node*.

S2. Construct a backhaul link (BH link) between the IAB node* and the IAB donor.

In an IAB network architecture, if the IAB node* is directly connected to the IAB donor, that is, the IAB node* may directly communicate with the IAB donor, the IAB donor establishes the backhaul link between the IAB node* and the IAB donor. If the IAB node* is indirectly connected to the IAB donor through another IAB node/IAB node*, the IAB donor needs to establish a backhaul link between every two nodes. For example, if the IAB node* is indirectly connected to the IAB donor through one IAB node, the IAB donor needs to establish a backhaul link between the IAB node* and the IAB node, and a backhaul link between the IAB node and the IAB donor.

Optionally, different backhaul links may be specifically established for an interface between the DU of the IAB node* and the IAB donor CU and an interface between the CU-UP of the IAB node* and the IAB donor CU. For example, for the interface between the IAB donor CU and the DU of the IAB node*, a backhaul link is established. The backhaul link may be used to carry a message between the IAB donor CU and the DU of the IAB node*, for example, an F1-C message (message). For another example, another backhaul link is established for an interface between the IAB donor CU-CP and the CU-UP of the IAB node*. The backhaul link may be used to carry a message between the IAB donor CU-CP and the CU-UP of the IAB node*, for example, an E1 message or referred to as an E1 application protocol (E1 application Protocol, E1AP) message.

S3. Apply for an internet protocol (Internet Protocol, IP) address of a DU of the IAB node* and an IP address of a CU-UP of the IAB node*.

In an optional implementation, the MT of the IAB node* respectively applies to the IAB donor for the IP address of the DU of the IAB node* and the IP address of the CU-UP of the IAB node*. Optionally, the MT of the IAB node* may carry, in an uplink radio resource control (radio resource control, RRC) message, indication information used to indicate an IP address requesting the DU the IAB node*, for example, apply for an IP for the DU (apply IP for DU) and indication information used to indicate an IP address of a CU-UP requesting the IAB node*, for example, apply for an IP for the CU-UP (apply IP for CU-UP).

Specifically, the MT of the IAB node* may include an IAB IP address request (for example, a name of an information element may be iab-IP-Request-r16) in other IAB information (IAB Other Information). The iab-IP-Request-r16 information element is used to apply for the IP address for the DU of the IAB node*, and a new information element used to apply for the IP address for the CU-UP of the IAB node* is added to the other IAB information, for example, an IAB IP address request information element of the CU-UP (for example, a name of the information element may be iab-IP-Request-for-CU-UP). The other information of the IAB is an uplink RRC message. Further, the MT of the IAB node* may include at least one of the following content in the iab-IP-Request-r16 information element and the iab-IP-Request-for-CU-UP information element: a quantity of IPv4 protocol-address requests (for example, a name of the information element may be iab-IPv4-AddressNumReq), a quantity of IPv6 protocol-address requests (for example, a name of the information element may be iab-IPv6-AddressNumReq), a quantity of all service requests (for example, a name of the information element may be allTraffic-NumReq), a quantity of E1 interface transmission requests (for example, a name of the information element may be E1-Traffic-NumReq), a quantity of F1-C interface transmission requests (for example, a name of the information element may be F1-C-Traffic-NumReq), a quantity of F1-U interface transmission requests (for example, a name of the information element may be F1-U-Traffic-NumReq), a quantity of non-F1 interface transmission requests (for example, a name of the information element may be non-F1-Traffic-NumReq), a quantity of non-E1 interface transmission requests (for example, a name of the information element may be non-E1-Traffic-NumReq), or the like.

Further, the DU of the IAB donor receives the uplink RRC message, and forwards the uplink RRC message to the CU of the IAB donor, so that the CU of the IAB donor may carry, in the downlink RRC message, indication information used to indicate an IP address allocated to the DU of the IAB node*, for example, the IP address of the DU (IP address of DU), and indication information used to indicate an IP address allocated to the CU-UP of the IAB node*, for example, the IP address of the CU-UP (IP address of CU-UP). Specifically, the IAB donor CU may include an IAB IP address configuration list (for example, a name of the information element may be iab-IP-AddressConfigurationList-r16) in a downlink RRC message sent to the MT of the IAB node*, for example, an RRC reconfiguration (RRC Reconfiguration) message. The iab-IP-AddressConfigurationList-r16 indicates the IAB donor CU to allocate the IP address to the DU of the IAB node*; and add a new information element used to indicate the IAB donor CU to allocate the IP address to the CU-UP of the IAB node* in the RRC reconfiguration (RRC Reconfiguration) message, for example, an IAB IP address configuration list (iab-IP-AddressForCUUPConfigurationList) of the CU UP.

In another optional implementation, the MT of the IAB node* may apply to OAM corresponding to the DU of the IAB node* for the IP address of the DU of the IAB node*, and apply to OAM corresponding to the CU-UP of the IAB node* for the IP address of the CU-UP of the IAB node*. For example, in step S1, when the MT of the IAB node* establishes a PDU session with the OAM, the IP address of the DU of the IAB node* and the IP address of the CU-UP of the IAB node* are respectively obtained. Then, the MT of the IAB node* may further report the IP address of the DU of the IAB node* and the IP address of the CU-UP of the IAB node* to the IAB donor CU through the uplink RRC message. For example, "IP of DU" and "IP of CU-UP" are indicated in the uplink RRC message. Specifically, the MT of the IAB node* may include an IAB IP report in other IAB information. (for example, a name of the information element may be iab-IP-Report-r16). The iab-IP-Report-r16 indicates the IP address reporting the DU of the IAB node*, and a new information element used to indicate the IP address reporting the CU-UP of the IAB node* is added to the other IAB information, for example, an IAB IP report of the CU-UP (iab-IP-for-CU-UP-Report). In this way, the IAB donor CU notifies the IAB donor DU of the IP address of the IAB node* DU and the IP address of the IAB node*CU-UP.

S4. Establish an interface between the DU of the IAB node* and the CU-CP of the IAB donor, and establish an interface between the CU-UP of the IAB node* and the CU-CP of the IAB donor.

The DU of the IAB node* sends a TNL setup or an F1 application protocol (F1 application Protocol, F1AP) message to the CU-CP of the IAB donor based on the backhaul link between the IAB node* and the IAB donor by using the IP address of the DU of the IAB node*, to establish an interface between the DU of the IAB node* and the CU-CP of the IAB donor. The CU-UP of the IAB node* sends a TNL setup or an E1AP message to the CU-CP of the IAB donor based on the backhaul link between the IAB node* and the IAB donor by using the IP address of the CU-UP of the IAB node*, to establish an interface between the CU-UP of the IAB node* and the CU-CP of the IAB donor.

Optionally, the DU of the IAB node* may include the BAP address of the MT of the IAB node* in an F1AP message, for example, an F1 setup request (F1 Setup Request) message, and include the IP address of the DU of the IAB node* in a packet header in which the F1AP message is encapsulated. After receiving the F1AP message, the CU of the IAB donor may determine that there is a mapping relationship between the IP address of the DU of the IAB node* and the BAP address of the MT of the IAB node*, that is, determine that the DU of the IAB node* and the MT of the IAB node* are co-deployed. Correspondingly, the DU of the IAB node* may also include the BAP address of the MT of the IAB node* in an E1AP message, for example, an E1 setup request (E1 Setup Request) message, and include the IP address of the CU-UP of the IAB node* in a packet header in which the E1AP message is encapsulated. After receiving the E1AP message, the CU of the IAB donor may determine that there is a mapping relationship between the IP address of the CU-UP of the IAB node* and the BAP address of the MT of the IAB node*, that is, determine that the CU-UP of the IAB node* and the MT of the IAB node* are co-deployed.

In addition, the CU of the IAB donor may further notify the DU of the IAB donor of a mapping relationship between the IP address of the DU of the IAB node* and the BAP address of the MT of the IAB node* and a mapping relationship between the IP address of the CU-UP of the IAB node* and the BAP address of the MT of the IAB node*. For example, the CU-CP of the IAB donor notifies the IAB donor DU of the IP address of the DU of the IAB node* and the BAP address of the MT of the IAB node* through an F1AP message; and the CU-CP of the IAB donor notifies the IAB donor DU of the IP address of the CU-UP of the IAB node* and the BAP address of the MT of the IAB node* through an F1AP message. Specifically, the CU-CP of the IAB donor may also carry "an IP address of the DU (IP address of DU), an IP address of the CU-UP (IP address of CU-UP), and a BAP address (BAP address)" in BH BAP configuration (configuration) information of the F1AP message.

An interface established between the DU of the IAB node* and the CU-CP of the IAB donor may be referred to as an F1 interface, an F1* interface, or another name. The interface supports a user plane protocol (F1-U/F1*-U) and a control plane protocol (F1-C/F1*-C). An interface established between the CU-UP of the IAB node* and the CU-CP of the IAB donor may be referred to as an E1 interface, an E1* interface, or another name. In addition, it should be noted that the name of the interface is only an example, and this is not limited in embodiments of this application.

For example, it is assumed that an IAB network architecture includes an IAB node 2, an IAB node 1, and an IAB donor, and the IAB node 2 is indirectly connected to the IAB donor IAB through the IAB node 1. The IAB node 2 is an IAB node* including a CU-UP, and the IAB node 1 is an IAB node* including a CU-UP or an original IAB node that does not include a CU-UP.

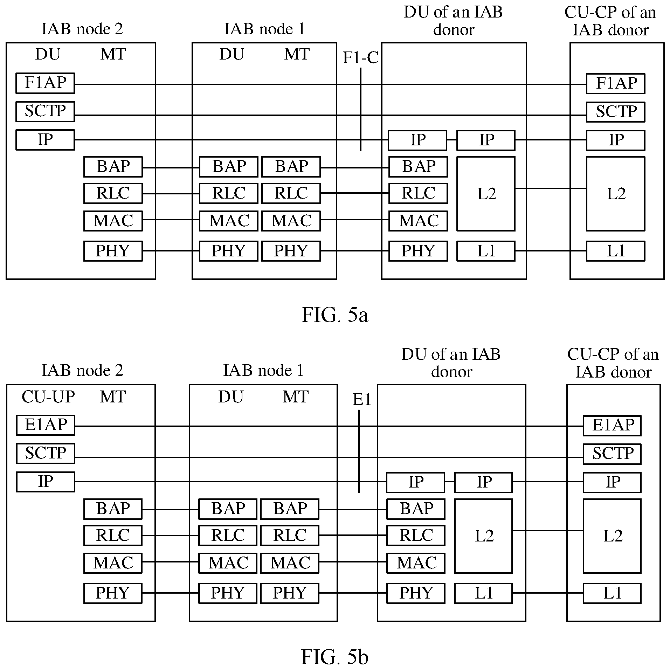

Based on the IAB network architecture, an IAB control plane F1 interface protocol stack shown in FIG. 5a shows a control plane protocol F1-C supported by an F1 interface between the DU of the IAB node 2 and the CU-CP of the IAB donor. An F1AP and a stream control transmission protocol (stream control transmission protocol, SCTP) layer are device to device between the CU-CP of the IAB donor and the DU of the IAB node 2. A message sent by the CU-CP of the IAB donor, for example, an F1AP message, carries a destination IP address, for example, the IP address of the DU of the IAB node 2. When receiving the message from the CU-CP of the IAB donor, the DU of the IAB donor determines, based on the mapping relationship between the IP address indicated by the CU-CP of the IAB donor and the BAP address, BAP layer routing information corresponding to the IP address carried in the received message, and forwards to an intermediate node, that is, the IAB node 1 through an air interface. The MT of the IAB node 1 determines that the BAP address corresponding to a received message is inconsistent with the BAP address of the MT of the IAB node 1, and then sends the received message to a next hop, that is, the IAB node 2, based on a pre-configured mapping relationship between the BAP routing layer information and the next-hop backhaul link. The MT of the IAB node 2 determines that the BAP address corresponding to the received message is consistent with the BAP address of the MT of the IAB node 2, then, data or a message in the message is sent to the DU of the IAB node 2 based on the IP address carried in the message.

Based on the IAB network architecture, an IAB control plane E1 interface protocol stack shown in FIG. 5b shows an E1 interface between the CU-UP of the IAB node 2 and the CU-CP of the IAB donor. An E1AP and an SCTP layer are device to device between the CU-CP of the IAB donor and the CU-UP of the IAB node 2. A message sent by the CU-CP of the IAB donor, for example, an E1AP message, carries a destination IP address, for example, the IP address of the CU-UP of the IAB node 2. When receiving the message from the CU-CP of the IAB donor, the DU of the IAB donor determines, based on the mapping relationship between the IP address indicated by the CU-CP of the IAB donor and the BAP address, BAP layer routing information corresponding to the IP address carried in the received message, and forwards the received message to an intermediate node, that is, the IAB node 1 through an air interface. The MT of the IAB node 1 determines that the BAP address corresponding to a received message is inconsistent with the BAP address of the MT, and then sends the received message to a next hop, that is, the IAB node 2, based on a pre-configured mapping relationship between the BAP routing layer information and the next-hop backhaul link. The MT of the IAB node 2 determines that the BAP address corresponding to the received message is consistent with the BAP address of the MT, then, data or a message in the message is sent to the CU-UP of the IAB node 2 based on the IP address carried in the message. In addition, in another optional implementation, when determining that the BAP address corresponding to the received message is consistent with the BAP address of the MT of the IAB node 2, the MT of the IAB node 2 may first uniformly send the message or data in the message to the DU of the IAB node 2, and the DU of the IAB node 2 leaves a message/data related to the MT of the IAB node 2, for example, a message carrying the IP address of the DU, and then sends the remaining message/data to the CU-UP of the IAB node 2.

Further, the following describes in detail a manner of transmitting the service data of the UE to the local UPF and the local DN for processing. It should be noted that "a plurality of" in the following in this application refers to two or more. The term "and/or" describes an association relationship for describing associated objects and represents that three relationships may exist. For example, A and/or B may represent the following three cases. Only A exists, both A and B exist, and only B exists. The character "/" generally indicates an "or" relationship between the associated objects. In addition, it should be understood that although terms such as "first" and "second" may be used in embodiments of the present invention to describe data, the data is not limited to these terms. These terms are merely used to distinguish the data from each other.

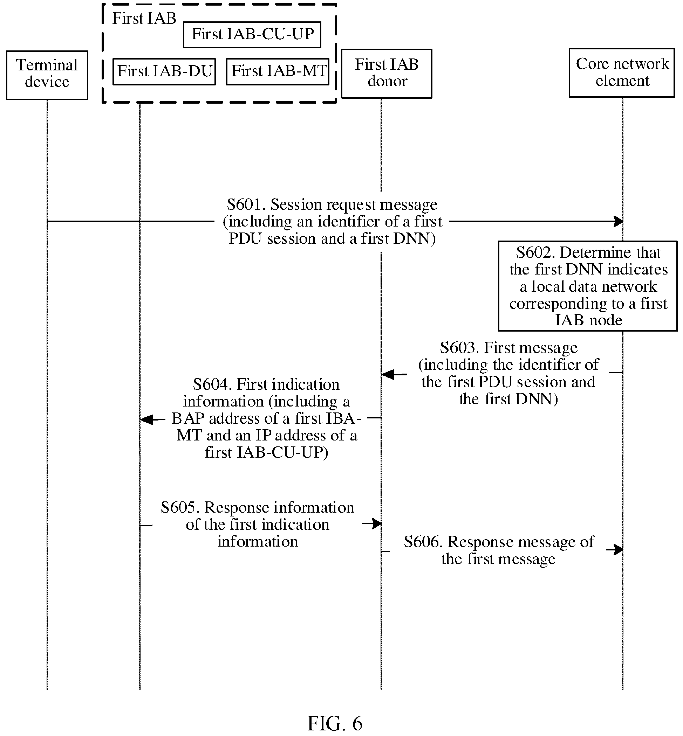

As shown in FIG. 6, embodiments of this application provide a data transmission method. The method includes the following steps.

S601. A terminal device sends a PDU session setup request message to a core network element, where the PDU session setup request message is used to request to establish a first PDU session, and the session request message carries an identifier of the first PDU session and a first DNN associated with the identifier of the first PDU session.

The terminal device accesses an IAB node indirectly or directly connected to a first IAB donor. The terminal device may send the PDU session setup request (PDU session setup request) message at the NAS layer, to request to establish the first PDU session. Optionally, if the IAB node accessed by the terminal device is indirectly connected to the first IAB donor through another IAB node, the PDU session setup request message sent by the terminal device may be transmitted to the first IAB donor through an access link between the terminal device and the IAB node accessed by the terminal device, a backhaul link between the IAB node accessed by the terminal device and the another IAB node, and a backhaul link between the another IAB node and the first IAB donor. Optionally, if the IAB node accessed by the terminal device is directly connected to the first IAB donor, the PDU session setup request message sent by the terminal device may be transmitted to the first IAB donor through an access link between the terminal device and the IAB node accessed by the terminal device, and a backhaul link between the IAB node accessed by the terminal device and the first IAB donor. In this way, the first donor transmits the PDU session setup request message to the core network element, and the core network element may be an AMF network element.

The first DNN may alternatively be an access point name (access point name, APN), a server name, a microservice (microservice) name, an identifier, or the like.

S602. The core network element determines that a first DNN carried in the PDU session setup request message indicates a local data network corresponding to the first IAB node, where a local data network corresponding to the first IAB node is a local data network connected to the first IAB node. Specifically, the first IAB node is the IAB node* including a CU-UP part, the first IAB node includes the first IAB CU-UP, the first IAB-DU, and the first IAB-MT, and the first IAB CU-UP is connected to the local data network corresponding to the first IAB node. In addition, the first IAB node may be an IAB node directly accessed by the terminal device, or may be an IAB node connected to the IAB node directly accessed by the terminal device. The first IAB node may be indirectly connected to the first IAB donor through another IAB node, or may be directly connected to the first IAB donor.

Optionally, the core network element may determine, based on the first DNN, a data network corresponding to the first DNN. If the first DNN corresponds to a plurality of data networks, the core network element may further determine, based on subscription information of the terminal device that sends the PDU session setup request message or a QoS parameter corresponding to the first PDU session, whether the first DNN indicates the local data network corresponding to the first IAB node.

S603. The core network element sends a first message to the first IAB donor, where the first message carries the identifier of the first PDU session and a first DNN associated with the identifier of the first PDU session.

The first message may be an NG interface message such as a PDU session resource setup request (PDU Session Resource Setup Request) message between the core network element such as the AMF and the first IAB donor, and is used to request the first IAB donor to configure a related resource for the first PDU session.

Optionally, the core network element may determine that some QoS flows (flow) related to the first PDU session need to be offloaded to the local data network indicated by the first DNN, and indicate, to the first IAB donor, which QoS flows need to be offloaded to the local data network indicated by the first DNN. For details, refer to the following two optional implementations.

In an optional manner, the core network element may carry the identifier of the first PDU session in the PDU session resource setup request message, the first DNN, and some QoS flow identifiers (QoS flow ID, QFI) included in the first PDU session. For example, the first PDU session includes a QFI #1 and a QFI #2, and the core network element carries the QFI #1 in the PDU session resource setup request, representing that the QFI #1 corresponds to the first DNN, and the QFI #2 does not correspond to the first DNN. The first IAB donor needs to offload a QoS flow identified by the QFI#1 to the local data network indicated by the first DNN, but does not need to offload a QoS flow identified by the QFI#2 to the local data network indicated by the first DNN.

In another optional manner, the core network element may carry the identifier of the first PDU session, the first DNN, one or more QFIs included in the first PDU session, and an offloading indication corresponding to each QFI in the one or more QFIs in the PDU session resource setup request message. The "offloading indication" is only a name, and may also be indicated by using another name. This is not limited in embodiments of this application. The offloading indication indicates whether the QoS flow identified by the QFI needs to be offloaded to the local data network indicated by the first DNN. For example, a value of the offloading indication may be 0 or 1, or a value of the offloading indication may be false or true. When a value of the offloading indication is 1 or true, it represents that the QoS flow identified by the QFI corresponding to the offloading indication needs to be offloaded to the local data network indicated by the first DNN. When a value of the offloading indication is 0 or false, it represents that the QoS flow identified by the QFI corresponding to the offloading indication does not need to be offloaded to the local data network indicated by the first DNN. For example, the core network element may carry offloading indications corresponding to some QFIs in the PDU session resource setup request message. For example, the core network element may carry, in the PDU session resource setup request message, an offloading indication corresponding to a first QFI in the one or more QFIs, and does not carry an offloading indication corresponding to a second QFI in the one or more QFIs, representing that a QoS flow identified by the first QFI needs to be offloaded to the local data network indicated by the first DNN, but does not need to offload a QoS flow identified by the second QFI to the local data network indicated by the first DNN.

S604. The first IAB donor notifies the first IAB CU-UP to establish the first PDU session.

Optionally, there is a mapping relationship between the first DNN and the first IAB-MT. When receiving a first message, the first IAB donor may determine the first IAB-MT based on the first DNN carried in the first message, and determine, based on the procedure of constructing communication between the IAB node* and the IAB donor, that the first IAB-MT and the first IAB CU-UP are co-deployed. In this case, the first IAB donor may notify the first IAB CU-UP to establish the first PDU session.

Optionally, the first IAB donor may learn, with reference to a procedure in Manner (1) or Manner (2), that there is a mapping relationship between the first DNN and the first IAB-MT.

Manner (1). A mapping relationship between the first IAB-MT and one or more of a local user plane function (local UPF) network element and a local data network (local DN) may be pre-configured in the core network element. In this case, the first IAB donor may determine, by receiving a second message from the core network element, that there is a mapping relationship between the first DNN and the first IAB-MT. The second message indicates that there is a mapping relationship between the first DNN and the first IAB-MT. Optionally, the second message may carry an identifier of the first IAB-MT and the first DNN, that is, specifically indicate a mapping relationship between the identifier of the first IAB-MT and the first DNN, to represent that there is a mapping relationship between the first DNN and the first IAB-MT. Optionally, the identifier of the first IAB-MT may be the BAP address of the first IAB-MT, or another identifier that may be identified by the first IAB donor as the first IAB-MT, for example, a UE identifier of an NG interface related to the first IAB-MT. The second message may be specifically an NG application protocol (NG application Protocol, NGAP) message or another message. This is not limited in embodiments of this application.

Manner (2). The first IAB-MT may notify the first IAB donor of the identifier of the local UPF and/or the local DN connected to the first IAB CU-UP, so that the first IAB donor may learn a mapping relationship between the first IAB-MT and one or more of a local user plane function (local UPF) network element and a local data network (local DN). Specifically, the OAM in which the first IAB CU-UP is located may configure the local UPF and/or the local DN connected to the first IAB CU-UP. In addition, the first IAB donor may further notify, through an NGAP message, the core network element of the DNN supported by the first IAB donor. For example, the first IAB donor notifies the core network element of the first DNN corresponding to the first IAB node.

In embodiments of this application, the IAB donor interacts with the core network element, so that the IAB donor may identify which PDU sessions of the UEs or some QoS flows need to be established on the IAB CU-UP, which may be processed by the local data network, to reduce a processing delay of the UE service.

In an optional implementation, when indicating the first IAB CU-UP to establish the first PDU session, the first IAB donor may further perform the following procedure: determining, based on an obtained mapping relationship between the first IAB-MT and the first DNN, whether a communication path exists between the IAB node accessed by the terminal device that initiates establishing a first PDU session setup request message and the first IAB-MT. If yes, the first IAB CU-UP is notified to establish the first PDU session; and if no, the core network element is notified that the first PDU session cannot be established. Optionally, a remote core network element (for example, a remote UPF) is still responsible for establishing the first PDU session.

In an optional implementation, the first IAB donor may specifically send, to the first IAB CU-UP, first indication information indicating to establish the first PDU session, where the first indication information carries the BAP address of the first IAB-MT and the IP address of the first IAB CU-UP.

Optionally, the first indication information sent by the first IAB donor to the first IAB node may be specifically implemented by using an E1AP message, and the E1AP message may be a bearer context setup request (Bearer Context setup request) message.

That the first IAB donor sends the first indication information to the first IAB CU-UP may specifically include the following process: the CU-CP of the first IAB donor determines to send an E1AP message to the first IAB CU-UP, to indicate the first IAB CU-UP to establish the first PDU session; first, the CU-CP of the first IAB donor includes the IP address of the first IAB CU-UP in a packet header in which the E1AP message is encapsulated, for example, the packet header may be an IP header (or referred to as an IP layer); and then, the CU-CP of the first IAB donor sends the E1AP message to the DU of the first IAB donor. The DU of the first IAB donor determines to send the E1AP message to the first IAB-MT based on the IP address of the first IAB CU-UP included in the IP header in which the E1AP message is encapsulated, and a mapping relationship between the BAP address of the first IAB-MT and the IP address of the first IAB CU-UP that is notified in advance by the CU-CP of the first IAB donor; and then, the DU of the first IAB donor includes the IP address of the first IAB CU-UP, the BAP address of the first IAB-MT, and routing information in a packet header in which the E1AP message is encapsulated. Specifically, the DU of the first IAB donor includes the IP address of the first IAB CU-UP in the IP header in which the E1AP message is encapsulated, and includes the BAP address of the first IAB-MT and the routing information in a BAP header (or referred to as a BAP layer) in which the E1AP message is encapsulated. After receiving an E1AP message sent by a previous-hop IAB node, the first IAB-MT determines that the BAP address included in the BAP header in which the E1AP message is encapsulated is the same as the BAP address of the first IAB-MT. Further, the first IAB-MT sends the received E1AP message to the first IAB CU-UP based on the IP address of the first IAB CU-UP included in the IP header in which the E1AP message is encapsulated.

In an optional implementation, before the first IAB donor sends the first indication information, the first IAB CU-UP may further send a first request message to the first IAB donor, where the first request message is used to request to establish an interface between the first IAB CU-UP and the CU-CP of the first IAB donor; and the first request message carries the BAP address of the first IAB-MT and the IP address of the first IAB CU-UP. In this case, the first IAB donor may determine a mapping relationship between the BAP address of the first IAB-MT and the IP address of the first IAB CU-UP based on the first request message, and carry the BAP address of the first IAB-MT and the IP address of the first IAB CU-UP when sending the first indication information, so that the first indication information may be received by the first IAB-MT based on the BAP address of the first IAB CU-UP, and the first IAB-MT sends the first indication information to the first IAB CU-UP based on the IP address of the first IAB CU-UP.

Optionally, the first request message may be specifically implemented by using an E1AP message. The first IAB CU-UP includes the BAP address of the first IAB-MT in the EIAP message, and includes the IP address of the first IAB CU-UP in an IP header in which the E1AP message is encapsulated. The first IAB CU-UP sends the E1AP message carrying the BAP address of the first IAB-MT and the IP address of the first IAB CU-UP to the first IAB-MT. The first IAB-MT sends the E1AP message to the DU of the first IAB donor; the DU of the first IAB donor transmits the E1AP message to the CU-CP of the first IAB donor; and the CU-CP of the first IAB donor learns, based on the IP address and the BAP address that are carried in the E1AP message, that the first IAB-CU-CP and the first IAB-MT are co-deployed, and there is a mapping relationship between the IP address of the first IAB CU-UP and the BAP address of the first IAB-MT. Further, the CU-CP of the first IAB donor may further notify the DU of the first IAB donor of a mapping relationship between the IP address of the first IAB CU-UP and the BAP address of the first IAB-MT.

In an optional implementation, the IP address of the first IAB CU-UP may be obtained in the following manner: the first IAB-MT applies to OAM in which the first IAB CU-UP is located for the IP address of the first IAB CU-UP; or the first IAB-MT sends a second request message to the first IAB donor, where the second request message is used to request the IP address of the first IAB CU-UP.

Optionally, the first IAB donor may obtain the IP address of the first IAB CU-UP in the following Manner (1) or Manner (2).

Manner (1). The first IAB donor receives an IP address of the first IAB CU-UP from the first IAB-MT. The first IAB-MT may apply for the IP address of the first IAB CU-UP from OAM in which the first IAB CU-UP is located.

Manner (2). The first IAB donor receives a second request message from the first IAB-MT, where the second request message is used to request the IP address of the first IAB CU-UP; and the first IAB donor allocates the IP address to the first IAB CU-UP, and sends a second indication message to the first IAB CU-UP, where the second indication message carries the IP address of the first IAB CU-UP. Specifically, that the first IAB donor allocates the IP address to the first IAB CU-UP may be that after receiving a request from the first IAB-MT, the CU of the first IAB donor or the CU-CP of the first IAB donor applies to the DU of the first IAB donor for allocating the IP address to the first IAB CU-UP. The DU of the first IAB donor sends the IP address allocated to the first IAB CU-UP to the CU of the first IAB donor or the CU-CP of the first IAB donor. Finally, the CU of the first IAB donor or the CU-CP of the first IAB donor sends, to the first IAB-MT, the IP address allocated to the first IAB CU-UP.

Optionally, as shown in FIG. 6, the method may further include step S605. After receiving the first indication information such as an E1AP message, the first IAB CU-UP sends response information of the first indication information to the first IAB donor. The response information may be specifically implemented by using an E1AP message (for example, a bearer context setup response), and is used to notify the first IAB donor that PDU session configuration is completed. S606. After receiving the response information, the first IAB donor sends a response message of the first message to the core network element, for example, a PDU session resource setup response (PDU Session Resource Setup Response) message, to notify the core network element that the PDU session resource configuration is completed. Subsequently, service data of the terminal device may be transmitted to the first IAB-MT, forwarded by the first IAB-MT to the first IAB CU-UP, and processed by the first IAB CU-UP. A local data network connected to the first IAB CU-UP provides a corresponding service for the terminal device.

Considering that in actual application, a case in which the terminal device hands over an IAB node accessed by the terminal device exists, the following describes in detail handover interaction procedures in different cases whether the target IAB node has an indirect connection relationship or a direct connection relationship with a source IAB donor (that is, the first IAB donor), and whether the target IAB node has a transmission path to the local data network corresponding to the first IAB node when the terminal device needs to hand over to and access the target IAB node.

For example, when the target IAB node is directly or indirectly connected to the second IAB donor, and the second IAB donor is different from the first IAB donor, the first IAB donor may determine to hand over the terminal device to the second IAB donor, and send a handover request message to a second IAB donor node. The handover request message carries the identifier of the first PDU session and the first DNN.

Optionally, the handover request (handover request, HO request) message may be specifically implemented by using an Xn interface message or another message. This is not limited in embodiments of this application.

Optionally, the first IAB donor may carry the identifier of the first PDU session, the first DNN, and some QoS flow identifiers (QoS flow ID, QFI) included in the first PDU session in the handover request message. For example, the first PDU session includes a QFI #1 and a QFI #2, and the first IAB donor carries the QFI #1 in the handover request message, which represents that the QFI #1 corresponds to the first DNN, and the QFI #2 does not correspond to the first DNN. The first IAB donor needs to offload the QoS flow identified by the QFI#1 to the target IAB node under the second IAB donor, but does not need to offload the QoS flow identified by the QFI#2 to the target IAB node under the second IAB donor.

Optionally, the first IAB donor may carry the identifier of the first PDU session, the first DNN, one or more QFIs included in the first PDU session, and an offloading indication corresponding to each QFI in the one or more QFIs in the handover request message. The "offloading indication" is only a name, and may also be indicated by using another name. This is not limited in embodiments of this application. The offloading indication indicates whether the QoS flow identified by the QFI needs to be offloaded to the target IAB node under the second IAB donor. For example, a value of the offloading indication may be 0 or 1, or a value of the offloading indication may be false or true. When a value of the offloading indication is 1 or true, it represents that the QoS flow identified by the QFI corresponding to the offloading execution needs to be offloaded to the target IAB node under the second IAB donor. When a value of the offloading indication is 0 or false, it represents that the QoS flow identified by the QFI corresponding to the offloading indication does not need to be offloaded to the target IAB node under the second IAB donor. For example, the first IAB donor may carry offloading indications corresponding to some QFIs in the handover request message. For example, the first IAB donor may carry an offloading indication corresponding to a first QFI in the one or more QFIs in the handover request message, and does not carry an offloading indication corresponding to a second QFI in the one or more QFIs, which represents that the QoS flow identified by the first QFI needs to be offloaded to the target IAB node under the second IAB donor, but does not need to be offloaded to the QoS flow identified by the second QFI to the target IAB node under the second IAB donor.

Optionally, the second IAB donor may determine, based on the first DNN, whether an IAB node supporting the first DNN exists under the second IAB donor, or whether a transmission path exists between the target IAB node and the IAB node supporting the first DNN. When the IAB node supporting the first DNN exists under the second donor or a transmission path exists between the target IAB node and the IAB node supporting the first DNN, the second IAB donor may send a handover determining message to the first IAB donor, to represent that the second IAB donor agrees to accept the handover request message.

For another example, when the target IAB node has an indirect connection relationship or a direct connection relationship with the first IAB donor, that is, the target IAB node is another IAB node that is different from the IAB node (or referred to as the source IAB node) accessed by the terminal device under the first IAB donor, the CU of the first IAB donor may determine, based on a network topology structure of the IAB node connected to the first IAB donor, that is, a parent-child relationship of the IAB node, whether the target IAB node has a path that may be connected to the IAB node accessed by the terminal device; if yes, the CU of the first IAB donor determines whether the target IAB node has a path that is connected to the first IAB node supporting the first DNN; and if no, performs the following procedure.

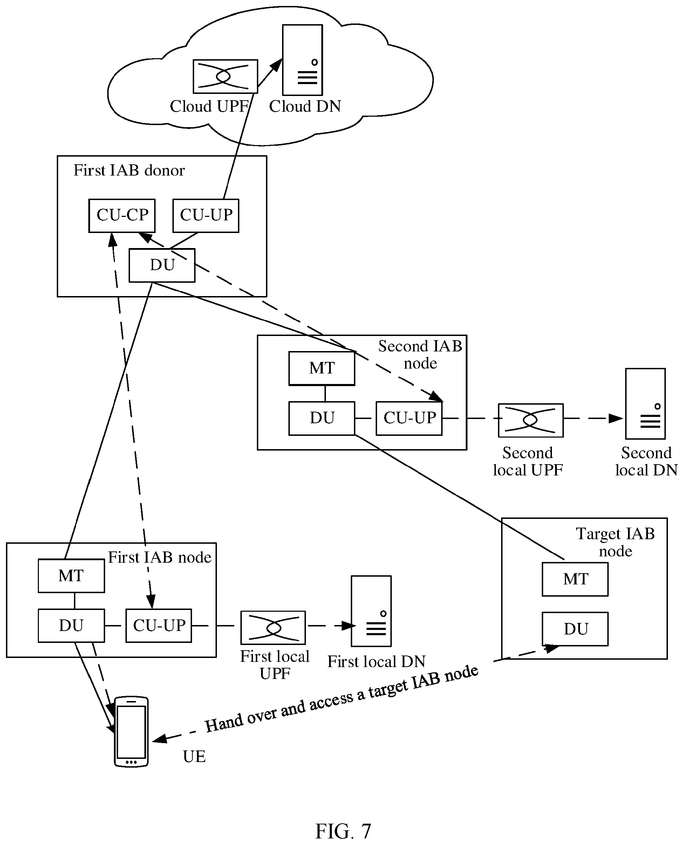

When the target IAB node may be connected to the second IAB node associated with the local data network, context information of the terminal device (for example, a UE identifier, a PDU session identifier, a QoS flow identifier, a corresponding QoS parameter, and a data packet sequence number) is transferred from the first IAB node to the second IAB node. The second IAB node is an IAB node* including a CU-UP, and a local data network associated with the second IAB node is the same as or different from a local data network indicated by the first DNN. In an optional implementation, the first IAB node sends context information of the terminal device to the CU of the first IAB donor, and then the CU of the first IAB donor sends the context information of the terminal device to the second IAB node. In another optional implementation, the CU of the first IAB donor finds a path between the first IAB node and the second IAB node based on a network topology structure of the IAB node, and notifies the first IAB node to transfer the context information of the terminal device through the path. Specifically, embodiments of this application provide an example of a handover procedure for the case. As shown in FIG. 7, an IAB node currently accessed by a terminal device UE is a first IAB node directly connected to a first IAB donor, and the first IAB node is associated with a first local data network. FIG. 7 shows that the first IAB node is connected to a first local UPF and a first local DN. The target IAB node to which the terminal device is to be handed over and accessed may be connected to the second IAB node. The second IAB node is an IAB node directly connected to the first IAB donor. The second IAB node is associated with the second local data network. FIG. 7 shows that the second IAB node is connected to the second local UPF and the second local DN.

When the target IAB node does not have a path connected to the second IAB node associated with the local data network, the target IAB node cannot continue to provide a local service for the terminal device through the local data network associated with the IAB node including the CU-UP, but needs to provide a service for the terminal device through a data network connected to a UPF on a core network side connected to the first IAB donor. In this case, the CU of the first IAB donor needs to notify the core network element to select a UPF suitable for the terminal device after the handover for the terminal device. For example, the CU of the first IAB donor may carry, in a path switch (path switch) message or another NGAP message sent to the core network element, indication information used to indicate the core network element to determine a UPF suitable for the terminal device after the handover, to notify the core network element, to select a UPF suitable for the terminal device after the handover for the terminal device.

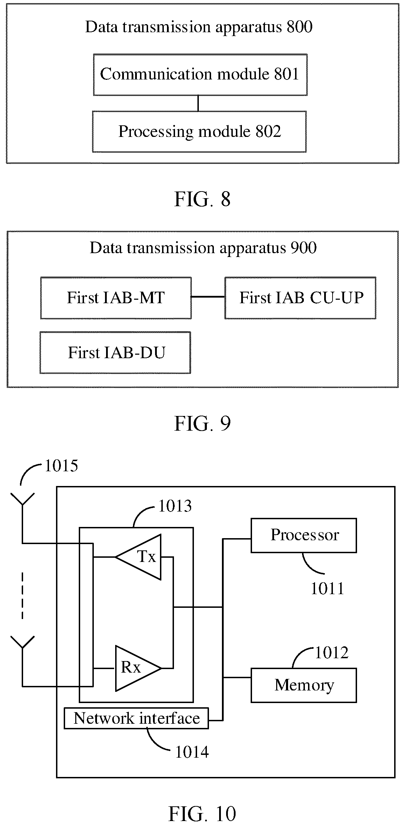

Based on a same concept, referring to FIG. 8, embodiments of this application provide a data transmission apparatus 800. The apparatus 800 includes a communication module 801 and a processing module 802.
(1) The data transmission apparatus 800 may be applied to a first IAB donor. Specifically, the data transmission apparatus 800 may be a first IAB donor, or may be applied to the first IAB donor, or may be an apparatus that may support the first IAB donor in performing a data transmission method. The following describes in detail a function or an execution process of a module in the data transmission apparatus 800 applied to the first IAB donor.

A communication module 801 is configured to receive a first message from a core network element, where the first message carries an identifier of a first protocol data unit PDU session and a first data network name DNN associated with the identifier of the first PDU session, and the first DNN indicates a local data network corresponding to a first IAB node; the first IAB node includes a first IAB central unit-user plane CU-UP, a first IAB-distributed unit DU, and a first IAB-mobile terminal MT; and the first IAB CU-UP is connected to the local data network; and
the communication module 801 is further configured to notify the first IAB CU-UP to establish the first PDU session.

In embodiments of this application, the IAB node includes a CU-UP, and the local data network connected to an IAB CU-UP is set. The IAB donor interacts with a core network, and offloads service data of a terminal device to the local data network connected to the IAB CU-UP for processing, so that a processing delay of a UE service may be reduced.

In an optional implementation, there is a mapping relationship between the first DNN and the first IAB-MT.

In an optional implementation, the communication module 801 is further configured to: receive a second message from the core network element, where the second message indicates a mapping relationship between an identifier of the first IAB-MT and the first DNN.

In an optional implementation, the communication module 801 is further configured to: send, to the first IAB CU-UP, a first indication message indicating to establish the first PDU session, where the first indication message carries a backhaul adaptation protocol BAP address of the first IAB-MT and an IP address of the first IAB CU-UP.

In an optional implementation, the apparatus further includes a processing module 802, where the communication module 801 is further configured to receive a first request message from the first IAB CU-UP, where the first request message is used to request to establish an interface between the first IAB CU-UP and a central unit-control plane CU-CP of the first IAB donor, and the first request message carries the BAP address of the first IAB-MT and the IP address of the first IAB CU-UP; and the processing module 802 is further configured to determine a mapping relationship between the BAP address of the first IAB-MT and the IP address of the first IAB CU-UP based on the first request message.

In an optional implementation, the communication module 801 is further configured to: receive the IP address of the first IAB CU-UP from the first IAB-MT; or receive a second request message from the first IAB-MT, where the second request message is used to request the IP address of the first IAB CU-UP, and send a second indication message to the first IAB CU-UP, where the second indication message carries the IP address of the first IAB CU-UP.

In an optional implementation, the processing module 802 is further configured to determine to hand over a terminal device to a second IAB donor; and the communication module 801 is further configured to send a handover request message to the second IAB donor, where the handover request message carries the identifier of the first PDU session and the first DNN.

(2) The data transmission apparatus 800 may be applied to a core network element. Specifically, the data transmission apparatus 800 may be a core network element, or may be applied to a core network element, or may be an apparatus that may support a core network element in performing a data transmission method. The following describes in detail a function or an execution process of a module in the data transmission apparatus 800 applied to a core network element.

A communication module 801 is configured to receive a protocol data unit PDU session setup request message from a terminal device, where the PDU session setup request message is used to request to establish a first PDU session, and the PDU session setup request message carries an identifier of the first PDU session and a first data network name DNN associated with the identifier of the first PDU session.

A processing module 802 is configured to determine that the first DNN indicates a local data network corresponding to a first integrated access and backhaul IAB node, where the first IAB node includes a first IAB central unit-user plane CU-UP, a first IAB-distributed unit DU, and a first IAB-mobile terminal MT; and the first IAB CU-UP is connected to the local data network.

The communication module 801 is further configured to send a first message to a first IAB donor connected to the first IAB node, where the first message carries the identifier of the first PDU session and the first DNN.

In embodiments of this application, the IAB node includes a CU-UP, and the local data network connected to the IAB CU-UP is set. The core network element may indicate the IAB donor to offload service data from a terminal device to the local data network connected to the IAB CU-UP for processing, so that a processing delay of a UE service may be reduced.

In an optional implementation, the communication module 801 is further configured to send a second message to the first IAB donor, where the second message indicates a mapping relationship between an identifier of the first IAB-MT and the first DNN.

Based on a same concept, referring to FIG. 9, embodiments of this application provide another data transmission apparatus 900. The apparatus 900 may be applied to a first IAB node. Specifically, the data transmission apparatus 900 may be the first IAB node, or may be applied to the first IAB node, or may be an apparatus that may support the first IAB node in performing a data transmission method. The following describes in detail a function or an execution process of a module in the data transmission apparatus 900 applied to a first IAB node.

The apparatus 900 is also referred to as a first IAB node, including a first IAB central unit-user plane CU-UP, a first IAB-distributed unit DU, and a first IAB-mobile terminal MT. The first IAB CU-UP is connected to a local data network corresponding to the first IAB node.

The first IAB-MT is configured to receive a first indication message from a first IAB donor, where the first indication message indicates the first IAB CU-UP to establish a first protocol data unit PDU session; and the first indication message carries a backhaul adaptation protocol BAP address of the first IAB-MT and an IP address of the first IAB CU-UP of the first IAB node. The first IAB-MT is further configured to forward the first indication message to the first IAB CU-UP based on the IP address of the first IAB CU-UP carried in the first indication message. The first IAB CU-UP is configured to establish the first PDU session.

In embodiments of this application, the IAB node includes a CU-UP, and the local data network connected to the IAB CU-UP is set. The IAB CU-UP processes, based on an indication of the IAB donor, a UE service offloaded by the IAB donor through the local data network, so that a processing delay of the UE service may be reduced.

In an optional implementation, the first indication message carries an identifier of the first PDU session, the identifier of the first PDU session has an association relationship with a first data network name DNN, and the first DNN indicates the local data network corresponding to the first IAB node.

In an optional implementation, there is a mapping relationship between the first DNN and the first IAB-MT.

In an optional implementation, the first IAB CU-UP is further configured to: before receiving first indication information, send a first request message to the first IAB donor, where the first request message is used to request to establish an interface between the first IAB CU-UP and a central unit-control plane CU-CP in the first IAB donor, and the first request message carries a BAP address of the first IAB-MT and an IP address of the first IAB CU-UP.

In an optional implementation, the first IAB CU-UP is further configured to: obtain the IP address of the first IAB CU-UP allocated by operation, administration, and maintenance OAM corresponding to the first IAB CU-UP; or send a second request message to the first IAB donor, where the second request message is used to request the IP address of the first IAB CU-UP, and send a second indication message from the first IAB donor to the first IAB CU-UP, where the second indication message carries the IP address of the first IAB CU-UP.

Based on a same concept, as shown in FIG. 10, embodiments of this application provide a communication apparatus 1000. The communication apparatus may be a relay node, and may implement a function of the relay node (for example, the first IAB node) in the foregoing method embodiments. Alternatively, the communication apparatus may be an access network device, for example, the first IAB donor or the second IAB donor, and may implement a function of the first IAB donor or a function of the second IAB donor in the foregoing method embodiments. For ease of description, FIG. 10 shows main components of the communication apparatus. As shown in FIG. 10:
the communication apparatus includes at least one processor 1011, at least one memory 1010, at least one transceiver 1013, at least one network interface 1014, and one or more antennas 1015. The processor 1011, the memory 1010, and the transceiver 1013 are connected to the network interface 1014, for example, through a bus. In embodiments of this application, the connection may include various interfaces, transmission lines, buses, or the like, and this is not limited in this embodiment. The antenna 1015 is connected to the transceiver 1013. The network interface 1014 is configured to enable the communication apparatus to be connected to another network device through a communication link.

For the transceiver 1013, the memory 1010, and the antenna 1015, refer to related descriptions in FIG. 10 to implement similar functions.

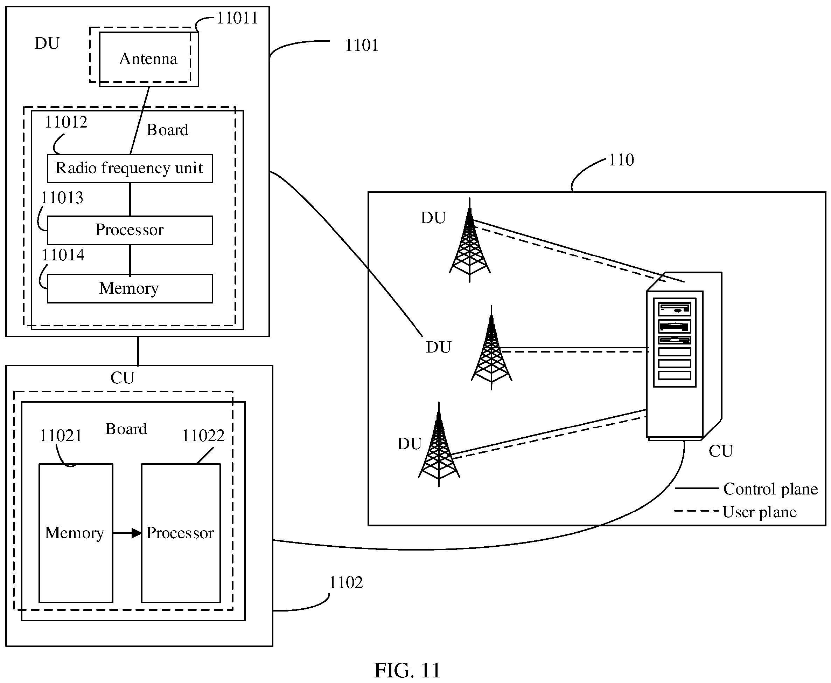

In addition, as shown in FIG. 11, embodiments of this application further provide a schematic structural diagram of an access network device, for example, may be a schematic structural diagram of the access network device. The access network device may use a CU-DU separation architecture. As shown in FIG. 11, the base station may be applied to the system shown in FIG. 1, FIG. 2, or FIG. 3, to implement a function of the access network device (the first IAB donor or the second IAB donor) in the foregoing method embodiments.

The access network device may include one or more DUs 1101 and one or more CUs 1102. The DU 1101 may include at least one antenna 11011, at least one radio frequency unit 11012, at least one processor 11013, and at least one memory 11014. The DU 1101 is mainly configured to: send and receive a radio frequency signal, perform conversion between a radio frequency signal and a baseband signal, and perform partial baseband processing. The CU 1102 may include at least one processor 11022 and at least one memory 11021. The CU 1102 and the DU 1101 may communicate with each other through an interface. A control plane (control plane) interface may be F1-C, and a user plane (user Plane) interface may be F1-U.

The CU 1102 is mainly configured to: perform baseband processing, control the base station, and the like. The DU 1101 and the CU 1102 may be physically disposed together, or may be physically disposed separately, namely, a distributed base station. The CU 1102 is a control center of the base station, may also be referred to as a processing unit, and is mainly configured to complete a baseband processing function. For example, the CU 1102 may be configured to control the base station to perform an operation procedure related to the network device in the foregoing method embodiments.

Specifically, baseband processing on the CU and the DU may be divided based on a protocol layer of a wireless network. For details, refer to the foregoing content.

In an instance, the CU 1102 may include one or more boards, and a plurality of boards may jointly support a radio access network (for example, a 5G network) of a single access standard, or may separately support radio access networks (for example, an LTE network, a 5G network, or another access network) of different access standards. The memory 11021 and the processor 11022 may serve one or more boards. In other words, a memory and a processor may be disposed on each board. Alternatively, a plurality of boards may share a same memory and a same processor. In addition, a necessary circuit may further be disposed on each board. The DU 1101 may include one or more boards, and a plurality of boards may jointly support a radio access network (for example, a 5G network) of a single access standard, or may separately support radio access networks (for example, an LTE network, a 5G network, or another access network) of different access standards. The memory 11014 and the processor 11013 may serve one or more boards. In other words, a memory and a processor may be disposed on each board. Alternatively, a plurality of boards may share a same memory and a same processor. In addition, a necessary circuit may further be disposed on each board.

Optionally, the CU 1102 may perform transmission with a child node of the access network device through the DU 1101. The CU 1102 may be connected to another access network device through an interface. The CU 1102 may receive data and/or a message from another access network device (for example, a CU of another access network device) through the interface, or the CU 1102 may send data and/or a message to the another access network device through the interface.

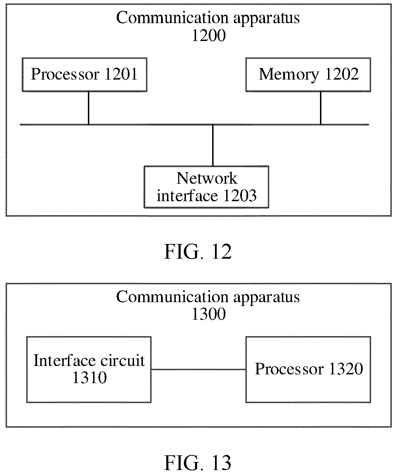

Based on a same concept, as shown in FIG. 12, embodiments of this application further provide another communication apparatus 1200. The communication apparatus 1200 may be a core network device (or referred to as a core network element), and may implement a function of the core network element in the foregoing embodiments. The communication apparatus includes at least one processor 1201, at least one memory 1202, and at least one network interface 1203. The processor 1201 and the memory 1202 are connected to the network interface 1203, for example, through a bus. In embodiments of this application, the connection may include various interfaces, transmission lines, buses, or the like, and this is not limited in this embodiment. The network interface 1014 is configured to enable the communication apparatus to connect to another network device, for example, a first IAB donor or a second IAB donor, through a communication link.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory) such as a random access memory (random-access memory, RAM). The memory may alternatively be any other medium that can be configured to carry or store expected program code in a form of an instruction or a data structure and that can be accessed by a computer. This is not limited thereto. The memory in embodiments of this application may alternatively be a circuit or any other apparatus that can implement a storage function, and is configured to store the computer program, the program instruction, and/or the data.

Based on the foregoing embodiments, referring to FIG. 13, embodiments of this application further provide another communication apparatus 1300, including: an interface circuit 1310 and a processor 1320. The interface circuit 1310 is configured to receive code instructions and transmit the code instructions to the processor. The processor 1320 is configured to run the code instructions to perform the method performed by the first IAB donor, the method performed by the first IAB node, or the method performed by the core network element in any one of the foregoing embodiments.

Based on the foregoing embodiments, embodiments of this application further provide a computer-readable storage medium. The computer-readable storage medium stores instructions, where when the instructions are executed, the method performed by the first IAB donor, the method performed by the first IAB node, or the method performed by the core network element in any one of the foregoing embodiments is implemented. The computer-readable storage medium may include any medium that can store program code, such as a USB flash drive, a removable hard disk, a read-only memory, a random access memory, a magnetic disk, or an optical disc.

To implement the functions of the communication apparatuses in FIG. 10 to FIG. 13, embodiments of this application further provide a chip, including a processor, configured to support the communication apparatus in implementing functions of the first IAB donor, the first IAB node, or the core network element in the foregoing method embodiments. In a possible design, the chip is connected to a memory or the chip includes the memory, and the memory is configured to store program instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A data transmission method, applied to a first integrated access and backhaul, IAB, donor, and comprising:
receiving (S603) a first message from a core network element, wherein the first message carries an identifier of a first protocol data unit, PDU, session and a first data network name, DNN, associated with the identifier of the first PDU session, and the first DNN indicates a local data network corresponding to a first IAB node; the first IAB node comprises a first IAB central unit-user plane, CU-UP, a first IAB-distributed unit, DU, and a first IAB-mobile terminal, MT; and the first IAB CU-UP is connected to the local data network;
determining, based on an obtained mapping relationship between the first IAB-MT and the first DNN, whether a communication path exists between a second IAB node accessed by a terminal device that initiates establishing a first PDU session setup request message and the first IAB-MT; and
if a communication path is determined to exist notifying (S604) the first IAB CU-UP to establish the first PDU session.

2. The method according to claim 1, further comprising:
receiving a second message from the core network element, wherein the second message indicates a mapping relationship between an identifier of the first IAB-MT and the first DNN.

3. The method according to any one of claims 1 to 2, wherein the notifying the first IAB CU-UP to establish the first PDU session comprises:
sending, to the first IAB CU-UP, a first indication message indicating to establish the first PDU session, wherein the first indication message carries a backhaul adaptation protocol, BAP, address of the first IAB-MT and an internet protocol, IP, address of the first IAB CU-UP.

4. The method according to claim 3, further comprising:
receiving a first request message from the first IAB CU-UP, wherein the first request message is used to request to establish an interface between the first IAB CU-UP and a central unit-control plane CU-CP of the first IAB donor; and the first request message carries the BAP address of the first IAB-MT and the IP address of the first IAB CU-UP; and
determining a mapping relationship between the BAP address of the first IAB-MT and the IP address of the first IAB CU-UP based on the first request message.

5. The method according to claim 4, further comprising:
receiving the IP address of the first IAB CU-UP from the first IAB-MT; or
receiving a second request message from the first IAB-MT, wherein the second request message is used to request the IP address of the first IAB CU-UP, and sending a second indication message to the first IAB CU-UP, wherein the second indication message carries the IP address of the first IAB CU-UP.

6. The method according to any one of claims 1 to 5, further comprising:
determining to hand over a terminal device to a second IAB donor; and
sending a handover request message to the second IAB donor, wherein the handover request message carries the identifier of the first PDU session and the first DNN.

7. A data transmission method, applied to a first integrated access and backhaul, IAB, node, wherein the first IAB node comprises a first IAB central unit-user plane, CU-UP, a first IAB-distributed unit, DU, and a first IAB-mobile terminal, MT; the first IAB CU-UP is connected to a local data network corresponding to the first IAB node; and the method comprises:
receiving (S604), by the first IAB-MT of the first IAB node, a first indication message from a first IAB donor, wherein the first indication message indicates the first IAB CU-UP to establish a first protocol data unit, PDU, session; and the first indication message carries a backhaul adaptation protocol, BAP, address of the first IAB-MT and an internet protocol, IP, address of the first IAB CU-UP of the first IAB node, wherein the first indication message carries an identifier of the first PDU session, the identifier of the first PDU session has an association relationship with a first data network name, DNN, and the first DNN indicates the local data network corresponding to the first IAB node, and wherein there is a mapping relationship between the first DNN and the first IAB-MT;
if the mapping relationship indicates that a communication path exists between a second IAB node accessed by a terminal device that initiates establishing a first PDU session setup request message and the first IAB-MT forwarding, by the first IAB-MT of the first IAB node, the first indication message to the first IAB CU-UP based on the IP address of the first IAB CU-UP carried in the first indication message; and
establishing, by the first IAB CU-UP of the first IAB node, the first PDU session.

8. The method according to claim 7, wherein before the receiving first indication message, the method further comprises:
sending, by the first IAB CU-UP of the first IAB node, a first request message to the first IAB donor, wherein the first request message is used to request to establish an interface between the first IAB CU-UP and a central unit-control plane CU-CP of the first IAB donor; and the first request message carries the BAP address of the first IAB-MT and the IP address of the first IAB CU-UP.

9. The method according to claim 8, further comprising:
obtaining, by the first IAB CU-UP of the first IAB node, the IP address of the first IAB CU-UP allocated by operation, administration, and maintenance OAM corresponding to the first IAB CU-UP; or
sending, by the first IAB-MT of the first IAB node, a second request message to the first IAB donor, wherein the second request message is used to request the IP address of the first IAB CU-UP, and sending a second indication message from the first IAB donor to the first IAB CU-UP, wherein the second indication message carries the IP address of the first IAB CU-UP.

10. A data transmission method, applied to a core network element, and comprising:
receiving (S601) a protocol data unit, PDU, session setup request message from a terminal device, wherein the PDU session setup request message is used to request to establish a first PDU session, and the PDU session setup request message carries an identifier of the first PDU session and a first data network name, DNN, associated with the identifier of the first PDU session;
determining (S602) that the first DNN indicates a local data network corresponding to a first integrated access and backhaul IAB node; the first IAB node comprises a first IAB central unit-user plane, CU-UP, a first IAB-distributed unit, DU, and a first IAB-mobile terminal, MT; and the first IAB CU-UP is connected to the local data network;
sending a first message to a first IAB donor connected to the first IAB node, wherein the first message carries the identifier of the first PDU session and the first DNN; and
sending a second message to the first IAB donor, wherein the second message indicates a mapping relationship between an identifier of the first IAB-MT and the first DNN, and wherein the mapping relationship is useable to determine whether a communication path exists between a second IAB node accessed by the terminal device and the first IAB-MT.

11. A communication apparatus, comprising modules configured to perform the method according to any one of claims 1 to 10.

## Patentansprüche

1. Datenübertragungsverfahren, angewandt auf einen ersten integrierten Zugangs- und Rücktransportgeber, IAB-Geber, und umfassend:
Empfangen (S603) einer ersten Nachricht von einem Kernnetzelement, wobei die erste Nachricht eine Kennung einer ersten Protokolldateneinheitssitzung, PDU-Sitzung, und einen ersten Datennetznamen, DNN, der mit der Kennung der ersten PDU-Sitzung assoziiert ist, enthält und der erste DNN ein lokales Datennetz, das einem ersten IAB-Knoten entspricht, anzeigt; der erste IAB-Knoten eine erste IAB-Zentraleinheit-Benutzerebene, IAB-CU-UP, eine erste IAB-verteilte Einheit, IAB-DU, und ein erstes IAB-Mobilendgerät, IAB-MT, umfasst; und die erste IAB-CU-UP mit dem lokalen Datennetz verbunden ist;
Bestimmen, auf der Grundlage einer erlangten Zuordnungsbeziehung zwischen dem ersten IAB-MT und dem ersten DNN, ob ein Kommunikationspfad zwischen einem zweiten IAB-Knoten, auf den durch eine Endgeräteeinrichtung zugegriffen wird, die Aufbauen einer ersten PDU-Sitzungseinrichtungs-Anforderungsnachricht initiiert, und dem ersten IAB-MT vorhanden ist; und
wenn bestimmt wird, dass ein Kommunikationspfad vorhanden ist, Benachrichtigen (S604) der ersten IAB-CU-UP, um die erste PDU-Sitzung aufzubauen.

2. Verfahren nach Anspruch 1, ferner umfassend:
Empfangen einer zweiten Nachricht von dem Kernnetzelement, wobei die zweite Nachricht eine Zuordnungsbeziehung zwischen einer Kennung des ersten IAB-MT und dem ersten DNN anzeigt.

3. Verfahren nach einem der Ansprüche 1 bis 2, wobei das Benachrichtigen der ersten IAB-CU-UP zum Aufbauen der ersten PDU-Sitzung Folgendes umfasst:
Senden, an die erste IAB CU-UP, einer ersten Anzeigenachricht, die anzeigt, die erste PDU-Sitzung aufzubauen, wobei die erste Anzeigenachricht eine Rücktransport-Anpassungsprotokoll-Adresse, BAP-Adresse, des ersten IAB-MT und eine Internetprotokoll-Adresse, IP-Adresse, der ersten IAB CU-UP enthält.

4. Verfahren nach Anspruch 3, ferner umfassend:
Empfangen einer ersten Anforderungsnachricht von der ersten IAB-CU-UP, wobei die erste Anforderungsnachricht dazu verwendet wird, anzufordern, eine Schnittstelle zwischen der ersten IAB-CU-UP und einer Zentraleinheit-Steuerebene, CU-CP, des ersten IAB-Gebers aufzubauen; und die erste Anforderungsnachricht die BAP-Adresse des ersten IAB-MT und die IP-Adresse der ersten IAB-CU-UP enthält; und
Bestimmen einer Zuordnungsbeziehung zwischen der BAP-Adresse des ersten IAB-MT und der IP-Adresse der ersten IAB-CU-UP auf der Grundlage der ersten Anforderungsnachricht.

5. Verfahren nach Anspruch 4, ferner umfassend:
Empfangen der IP-Adresse der ersten IAB-CU-UP von dem ersten IAB-MT; oder
Empfangen einer zweiten Anforderungsnachricht von dem ersten IAB-MT, wobei die zweite Anforderungsnachricht dazu verwendet wird, die IP-Adresse der ersten IAB-CU-UP anzufordern, und Senden einer zweiten Anzeigenachricht an die erste IAB-CU-UP,
wobei die zweite Anzeigenachricht die IP-Adresse der ersten IAB-CU-UP enthält.

6. Verfahren nach einem der Ansprüche 1 bis 5, ferner umfassend:
Bestimmen, eine Endgeräteeinrichtung an einen zweiten IAB-Geber zu übergeben; und
Senden einer Übergabeanforderungsnachricht an den zweiten IAB-Geber, wobei die Übergabeanforderungsnachricht die Kennung der ersten PDU-Sitzung und des ersten DNN enthält.

7. Datenübertragungsverfahren, angewandt auf einen ersten integrierten Zugangs- und Rücktransportknoten, IAB-Knoten, wobei der erste IAB-Knoten eine erste IAB-Zentraleinheit-Benutzerebene, IAB-CU-UP, eine erste IAB-verteilte Einheit, IAB-DU, und ein erstes IAB-Mobilendgerät, IAB-MT, umfasst; die erste IAB-CU-UP mit einem lokalen Datennetz verbunden ist, das dem ersten IAB-Knoten entspricht; und das Verfahren Folgendes umfasst:
Empfangen (S604), durch das erste IAB-MT des ersten IAB-Knotens, einer ersten Anzeigenachricht von einem ersten IAB-Geber, wobei die erste Anzeigenachricht der ersten IAB-CU-UP anzeigt, eine erste Protokolldateneinheitssitzung, PDU-Sitzung, aufzubauen;
und die erste Anzeigenachricht eine Rücktransport-Anpassungsprotokoll-Adresse, BAP-Adresse, des ersten IAB-MT und eine Internetprotokoll-Adresse, IP-Adresse, der ersten IAB-CU-UP des ersten IAB-Knotens enthält, wobei die erste Anzeigenachricht eine Kennung der ersten PDU-Sitzung enthält, die Kennung der ersten PDU-Sitzung eine Assoziationsbeziehung mit einem ersten Datennetznamen, DNN, aufweist und der erste DNN das lokale Datennetz, das dem ersten IAB-Knoten entspricht, anzeigt und wobei eine Zuordnungsbeziehung zwischen dem ersten DNN und dem ersten IAB-MT besteht;
wenn die Zuordnungsbeziehung anzeigt, dass ein Kommunikationspfad zwischen einem zweiten IAB-Knoten, auf den durch eine Endgeräteeinrichtung zugegriffen wird, die Aufbauen einer ersten PDU-Sitzungsaufbau-Anforderungsnachricht initiiert, und dem ersten IAB-MT vorhanden ist, Weiterleiten, durch das erste IAB-MT des ersten IAB-Knotens, der ersten Anzeigenachricht an die erste IAB-CU-UP auf der Grundlage der IP-Adresse der ersten IAB-CU-UP, die in der ersten Anzeigenachricht enthalten ist; und
Aufbauen, durch die erste IAB-CU-UP des ersten IAB-Knotens, der ersten PDU-Sitzung.

8. Verfahren nach Anspruch 7, wobei das Verfahren vor dem Empfangen der ersten Anzeigenachricht ferner Folgendes umfasst:
Senden, durch die erste IAB-CU-UP des ersten IAB-Knotens, einer ersten Anforderungsnachricht an den ersten IAB-Geber, wobei die erste Anforderungsnachricht dazu verwendet wird, anzufordern, eine Schnittstelle zwischen der ersten IAB-CU-UP und einer Zentraleinheit-Steuerebene, CU-CP, des ersten IAB-Gebers aufzubauen; und die erste Anforderungsnachricht die BAP-Adresse des ersten IAB-MT und die IP-Adresse der ersten IAB-CU-UP enthält.

9. Verfahren nach Anspruch 8, ferner umfassend:
Erlangen, durch die erste IAB-CU-UP des ersten IAB-Knotens, der IP-Adresse der ersten IAB CU-UP, die durch Betrieb, Verwaltung und Wartung, OAM, die der ersten IAB-CU-UP entsprechen, zugewiesen wird; oder
Senden, durch das erste IAB-MT des ersten IAB-Knotens, einer zweiten Anforderungsnachricht an den ersten IAB-Geber, wobei die zweite Anforderungsnachricht dazu verwendet wird, die IP-Adresse der ersten IAB-CU-UP anzufordern, und Senden einer zweiten Anzeigenachricht von dem ersten IAB-Geber an die erste IAB-CU-UP, wobei die zweite Anzeigenachricht die IP-Adresse der ersten IAB-CU-UP enthält.

10. Datenübertragungsverfahren, angewandt auf ein Kernnetzelement angewendet und umfassend:
Empfangen (S601) einer Protokolldateneinheitssitzungsaufbau-Anforderungsnachricht, PDU-Sitzungsaufbau-Anforderungsnachricht von einer Endgeräteeinrichtung, wobei die PDU-Sitzungsaufbau-Anforderungsnachricht verwendet wird, um anzufordern, eine ersten PDU-Sitzung aufzubauen, und die PDU-Sitzungsaufbau-Anforderungsnachricht eine Kennung der ersten PDU-Sitzung und einen ersten Datennetznamen, DNN, enthält, der mit der Kennung der ersten PDU-Sitzung assoziiert ist;
Bestimmen (S602), dass der erste DNN ein lokales Datennetz anzeigt, das einem ersten integrierten Zugangs- und Rücktransportknoten, IAB-Knoten, entspricht; der erste IAB-Knoten eine erste IAB-Zentraleinheit-Benutzerebene, IAB-CU-UP, eine erste IAB-verteilte Einheit, IAB-DU, und ein erstes IAB-Mobilendgerät, IAB-MT, umfasst; und die erste IAB-CU-UP mit dem lokalen Datennetz verbunden ist;
Senden einer ersten Nachricht an einen ersten IAB-Geber, der mit dem ersten IAB-Knoten verbunden ist, wobei die erste Nachricht die Kennung der ersten PDU-Sitzung und den ersten DNN enthält; und
Senden einer zweiten Nachricht an den ersten IAB-Geber, wobei die zweite Nachricht eine Zuordnungsbeziehung zwischen einer Kennung des ersten IAB-MT und dem ersten DNN anzeigt und wobei die Zuordnungsbeziehung verwendbar ist, um zu bestimmen, ob ein Kommunikationspfad zwischen einem zweiten IAB-Knoten, auf den durch die Endgeräteeinrichtung zugegriffen wird, und dem ersten IAB-MT vorhanden ist.

11. Kommunikationsvorrichtung, umfassend Module, die dazu konfiguriert sind, das Verfahren nach einem der Ansprüche 1 bis 10 durchzuführen.

## Revendications

1. Procédé de transmission de données, appliqué à un premier donneur d'accès et de liaison terrestre intégrés, IAB, et comprenant :
la réception (S603) d'un premier message provenant d'un élément de réseau central, dans lequel le premier message transporte un identifiant d'une première session d'unité de données de protocole, PDU, et un premier nom de réseau de données, DNN, associé à l'identifiant de la première session PDU, et le premier DNN indique un réseau de données local correspondant à un premier nœud IAB ; le premier nœud IAB comprend un premier plan utilisateur d'unité centrale, CU-UP, d'IAB, une première unité distribuée, DU, d'IAB, et un premier terminal mobile, MT, d'IAB ; et le premier CU-UP d'IAB est connecté au réseau de données local ;
le fait de déterminer, sur la base d'une relation de mappage obtenue entre le premier MT d'IAB et le premier DNN, si un chemin de communication existe entre un second nœud d'IAB auquel accède un dispositif terminal qui initie l'établissement d'un premier message de demande d'établissement de session PDU et le premier MT d'IAB ; et
si un chemin de communication est déterminé comme existant, la notification (S604) au premier CU-UP d'IAB d'établir la première session PDU.

2. Procédé selon la revendication 1, comprenant également :
la réception d'un second message provenant de l'élément de réseau central, dans lequel le second message indique une relation de mappage entre un identifiant du premier MT d'IAB et le premier DNN.

3. Procédé selon l'une quelconque des revendications 1 et 2, dans lequel la notification au premier CU-UP d'IAB d'établir la première session PDU comprend :
l'envoi, au premier CU-UP d'IAB, d'un premier message d'indication indiquant d'établir la première session PDU, dans lequel le premier message d'indication transporte une adresse de protocole d'adaptation de liaison terrestre, BAP, du premier MT d'IAB et une adresse de protocole Internet, IP, du premier CU-UP d'IAB.

4. Procédé selon la revendication 3, comprenant également :
la réception d'un premier message de demande provenant du premier CU-UP d'IAB, dans lequel le premier message de demande est utilisé pour demander l'établissement d'une interface entre le premier CU-UP d'IAB et un plan de commande d'unité centrale CU-CP du premier donneur IAB ; et le premier message de demande transporte l'adresse BAP du premier MT d'IAB et l'adresse IP du premier CU-UP d'IAB ; et
la détermination d'une relation de mappage entre l'adresse BAP du premier MT d'IAB et l'adresse IP du premier CU-UP d'IAB sur la base du premier message de demande.

5. Procédé selon la revendication 4, comprenant également :
la réception de l'adresse IP du premier CU-UP d'IAB provenant du premier MT d'IAB ; ou
la réception d'un second message de demande provenant du premier MT d'IAB, dans lequel le second message de demande est utilisé pour demander l'adresse IP du premier CU-UP d'IAB, et l'envoi d'un second message d'indication au premier CU-UP d'IAB, dans lequel le second message d'indication transporte l'adresse IP du premier CU-UP d'IAB.

6. Procédé selon l'une quelconque des revendications 1 à 5, comprenant également :
le fait de déterminer s'il faut transférer un dispositif terminal à un second donneur IAB ; et
l'envoi d'un message de demande de transfert au second donneur IAB, dans lequel le message de demande de transfert transporte l'identifiant de la première session PDU et le premier DNN.

7. Procédé de transmission de données, appliqué à un premier nœud d'accès et de liaison terrestre intégrés, IAB, dans lequel le premier nœud IAB comprend un premier plan utilisateur d'unité centrale, CU-UP, d'IAB, une première unité distribuée, DU, d'IAB, et un premier terminal mobile, MT, d'IAB ; le premier CU-UP d'IAB est connecté au réseau de données local correspondant au premier nœud IAB ; et le procédé comprend :
la réception (S604), par le premier MT d'IAB du premier nœud IAB, d'un premier message d'indication provenant d'un premier donneur IAB, dans lequel le premier message d'indication indique au premier CU-UP d'IAB d'établir une première session d'unité de données de protocole, PDU ; et le premier message d'indication transporte une adresse de protocole d'adaptation de liaison terrestre, BAP, du premier MT d'IAB et une adresse de protocole Internet, IP, du premier CU-UP d'IAB du premier nœud IAB, dans lequel le premier message d'indication transporte un identifiant de la première session PDU, l'identifiant de la première session PDU a une relation d'association avec un premier nom de réseau de données, DNN, et le premier DNN indique le réseau de données local correspondant au premier nœud IAB, et dans lequel il existe une relation de mappage entre le premier DNN et le premier MT d'IAB ;
si la relation de mappage indique qu'un chemin de communication existe entre un second nœud IAB auquel accède un dispositif terminal qui initie l'établissement d'un premier message de demande d'établissement de session PDU et le premier MT d'IAB, l'acheminement, par le premier MT d'IAB du premier nœud IAB, du premier message d'indication vers le premier CU-UP d'IAB sur la base de l'adresse IP du premier CU-UP d'IAB transportée dans le premier message d'indication ; et
l'établissement, par le premier CU-UP d'IAB du premier nœud IAB, de la première session PDU.

8. Procédé selon la revendication 7, dans lequel avant la réception d'un premier message d'indication, le procédé comprend également :
l'envoi, par le premier CU-UP d'IAB du premier nœud IAB, d'un premier message de demande au premier donneur IAB, dans lequel le premier message de demande est utilisé pour demander l'établissement d'une interface entre le premier CU-UP d'IAB et un plan de commande d'unité centrale CU-CP du premier donneur IAB ; et le premier message de demande transporte l'adresse BAP du premier MT d'IAB et l'adresse IP du premier CU-UP d'IAB.

9. Procédé selon la revendication 8, comprenant également :
l'obtention, par le premier CU-UP d'IAB du premier nœud IAB, de l'adresse IP du premier CU-UP d'IAB attribuée par l'exploitation, l'administration, et la maintenance OAM correspondant au premier CU-UP d'IAB ; ou
l'envoi, par le premier MT d'IAB du premier nœud IAB, d'un second message de demande au premier donneur IAB, dans lequel le second message de demande est utilisé pour demander l'adresse IP du premier CU-UP d'IAB, et l'envoi d'un second message d'indication provenant du premier donneur IAB au premier CU-UP d'IAB, dans lequel le second message d'indication transporte l'adresse IP du premier CU-UP d'IAB.

10. Procédé de transmission de données, appliqué à un élément de réseau central, et comprenant :
la réception (S601) d'un message de demande d'établissement de session d'unité de données de protocole, PDU, provenant d'un dispositif terminal, dans lequel le message de demande d'établissement de session PDU est utilisé pour demander l'établissement d'une première session PDU, et le message de demande d'établissement de session PDU transporte un identifiant de la première session PDU et un premier nom de réseau de données, DNN, associé à l'identifiant de la première session PDU ;
la détermination (S602) que le premier DNN indique un réseau de données local correspondant à un premier nœud d'accès et de liaison terrestre intégrés IAB ; le premier nœud IAB comprend un premier plan utilisateur d'unité centrale, CU-UP, d'IAB, une première unité distribuée, DU, d'IAB, et un premier terminal mobile, MT, d'IAB ; et le premier CU-UP d'IAB est connecté au réseau de données local ;
l'envoi d'un premier message à un premier donneur IAB connecté au premier nœud IAB, dans lequel le premier message transporte l'identifiant de la première session PDU et le premier DNN ; et
l'envoi d'un second message au premier donneur IAB, dans lequel le second message indique une relation de mappage entre un identifiant du premier MT d'IAB et le premier DNN, et dans lequel la relation de mappage est utilisable pour déterminer si un chemin de communication existe entre un second nœud IAB auquel accède le dispositif terminal et le premier MT d'IAB.

11. Appareil de communication, comprenant des modules configurés pour réaliser le procédé selon l'une quelconque des revendications 1 à 10.
